(19) **Europäisches Patentamt**
**European Patent Office**
**Office européen des brevets**

(11) **EP 1 728 000 B1**

(12) **EUROPÄISCHE PATENTSCHRIFT**

(45) Veröffentlichungstag und Bekanntmachung des Hinweises auf die Patenterteilung:
**11.06.2008 Patentblatt 2008/24**

(21) Anmeldenummer: **05730297.8**

(22) Anmeldetag: **23.03.2005**

(51) Int Cl.:
**F16D 48/06** (2006.01)

(86) Internationale Anmeldenummer:
**PCT/EP2005/003081**

(87) Internationale Veröffentlichungsnummer:
**WO 2005/093277 (06.10.2005 Gazette 2005/40)**

(54) **HYDRAULISCHE BETÄTIGUNGSVORRICHTUNG FÜR EINE KRAFTFAHRZEUG-REIBKUPPLUNG**

HYDRAULIC ACTUATING DEVICE FOR AN AUTOMOTIVE FRICTION CLUTCH

DISPOSITIF DE COMMANDE HYDRAULIQUE D'UN EMBRAYAGE A FRICTION D'UN VEHICULE AUTOMOBILE

(84) Benannte Vertragsstaaten:
**DE FR GB IT**

(30) Priorität: **24.03.2004 DE 102004015185**

(43) Veröffentlichungstag der Anmeldung:
**06.12.2006 Patentblatt 2006/49**

(60) Teilanmeldung:
**08002605.7 / 1 927 776**
**08002630.5 / 1 927 777**

(73) Patentinhaber: **FTE automotive GmbH**
**96106 Ebern (DE)**

(72) Erfinder:
• **PORZEL, Rainer**
**96106 Ebern (DE)**
• **KADLAC, Otto**
**96106 Ebern (DE)**
• **OBERLACK, Norbert**
**91315 Höchstadt (DE)**
• **PEUKER, Karl**
**96106 Ebern (DE)**
• **ZSARI, Geza**
**96106 Ebern (DE)**

(74) Vertreter: **Oppermann, Mark**
**Oppermann & Oppermann**
**Patentanwälte**
**Am Wiesengrund 35**
**63075 Offenbach (DE)**

(56) Entgegenhaltungen:
**EP-A- 0 324 553**     **EP-A- 1 531 279**
**WO-A-20/05047722**     **GB-A- 2 231 933**

**Beschreibung**

TECHNISCHES GEBIET

Die Erfindung bezieht sich auf eine hydraulische Betätigungsvorrichtung für eine Kraftfahrzeug-Reibkupplung wie sie massenweise in der Automobilindustrie zum Einsatz kommen.

STAND DER TECHNIK

Eine hydraulische Betätigungsvorrichtung für eine Kraftfahrzeug-Reibkupplung, wie sie etwa im "Handbuch der hydraulischen Bremsanlage und Kupplungsbetätigung" der Anmelderin, 1. Auflage 1998, auf Seite 261 gezeigt ist, hat einen an einen mit Hydraulikflüssigkeit gefüllten Ausgleichsbehälter angeschlossenen Geberzylinder, dessen Geberkolben über ein Betätigungsorgan in Form eines Kupplungspedals kraftbeaufschlagt und verschoben werden kann. Der Geberzylinder ist über eine Druckleitung mit einem Nehmerzylinder hydraulisch verbunden, bei dem es sich um einen "klassischen" Nehmerzylinder mit einem zylindrischen Kolben oder aber um einen sogenannten "Zentralausrücker" mit einem konzentrisch bezüglich der Getriebeeingangswelle angeordneten Ringkolben handeln kann. Wird das Kupplungspedal niedergetreten, so wird der im Geberzylinder erzeugte Druck Über die Flüssigkeitssäule in der Druckleitung auf den Nehmerzylinder übertragen. Im Ergebnis wird ein Ausrückorgan der Kupplung - im Falle des klassischen Nehmerzylinders der mit dem Ausrücklager der Kupplung wirkverbundene Ausrückhebel bzw. im Falle des Zentralausrückers das Ausrücklager - über den Nehmerzylinderkolben mit einer Betätigungskraft beaufschlagt, um über einen Ausrückmechanismus die Kupplungsdrückplatte von der Kupplungsmitnehmerscheibe und somit den Motor vom Getriebe des Kraftfahrzeugs zu trennen.

In letzter Zeit zeichnet sich zunehmend ein Trend ab, Kraftfahrzeuge stärker zu motorisieren. Infolgedessen haben moderne Kraftfahrzeug-Reibkupplungen nicht selten Drehmomente von über 300 Nm zu übertragen. Um derartig stark dimensionierte Kupplungen auszurücken, sind im Verhältnis hohe Betätigungskräfte aufzubringen. Wird hierzu eine konventionelle hydraulische Betätigungsvorrichtung eingesetzt, führt dies zu einem hohen Kraftbedarf am Kupplungspedal. Derartig hohe zum Ausrücken der Kupplung benötigte Pedalkräfte sind insbesondere bei Personenkraftwagen jedoch unerwünscht.

Zwar sind im Stand der Technik auch hydraulische Betätigungsvorrichtungen für Kraftfahrzeug-Reibkupplungen bekannt geworden, bei denen der Geberkolben des Geberzylinders stets (z.B. US 4,918,921) bzw. wahlweise (z.B. US 5,002,166) über ein mittels eines Elektromotors antreibbares Getriebe kraftbeaufschlagbar und verschiebbar ist. Im Falle eines solchen Servobetriebs dieser Betätigungsvorrichtungen erfährt die Bedienperson jedoch keine für den jeweiligen Ausrückzustand der Reibkupplung repräsentative Rückmeldung am Kupplungspedal.

Ein dem vorstehend genannten Stand der Technik ähnlicher, elektromotorisch betätigbarer Geberzylinder für eine hydraulische Kupplungsbetätigungsvorrichtung ist der US 5,094,079 zu entnehmen. Die hier offenbarte Geberzylinderbaugruppe benötigt allerdings u.a. einen erheblichen Bauraum, der in modernen Kraftfahrzeugen am Pedalbock für das Kupplungspedal nicht immer verfügbar ist.

Als nächstliegender Stand der Technik sollte EP-A-0324553 betrachtet werden.

Der Erfindung liegt die Aufgabe zugrunde, eine möglichst einfach und kompakt aufgebaute hydraulische Betätigungsvorrichtung für eine Kraftfahrzeug-Reibkupplung zu schaffen, mittels der auch Kupplungen betätigt werden können, die im Verhältnis hohe Drehmomente übertragen, ohne daß hierfür im Vergleich zu der gattungsgemäßen hydraulischen Betätigungsvorrichtung größere Pedalkräfte bzw. -wege erforderlich sind.

Diese Aufgabe wird durch die im Patentanspruch 1 oder 2 angegebenen Merkmale gelöst. Vorteilhafte bzw. zweckmäßige Weiterbildungen der Erfindung sind Gegenstand der Patentansprüche 2 bis 6 und werden nachfolgend in der detaillierten Beschreibung der Ausführungsbeispiele noch näher beschrieben werden.

DARSTELLUNG DER ERFINDUNG

Bei Reihenschaltung von Geberkolben und Stellkolben ermöglicht die Stelleinheit also eine definierte Erhöhung der auf die Flüssigkeitssäule zwischen Geberkolben und Nehmerkolben über das Betätigungsorgan, z.B. ein Kupplungspedal, aufgebrachten Kraft, woraus eine Erhöhung des Druckniveaus in der am Nehmerkolben anstehenden Flüssigkeitssäule resultiert. Mit anderen Worten gesagt setzt sich die über den Nehmerkolben an der Kupplung aufgebrachte Ausrückkraft aus zwei Kraftanteilen zusammen, nämlich einem ersten Kraftanteil, der über das Betätigungsorgan von der Bedienperson aufgebracht wird, und einem zweiten Kraftanteil, der durch die Stelleinheit beigesteuert wird. Im Ergebnis ist es möglich, durch die resultierende Erhöhung des Druckniveaus in der am Nehmerkolben anstehenden Flüssigkeitssäule unter Beibehaltung eines herkömmlichen Nehmerzylinders Kupplungen zu betätigen, die im Verhältnis hohe Drehmomente zu übertragen haben und demgemäß hohe Ausrückkräfte erfordern, ohne daß dies- verglichen mit herkömmlichen Betätigungsvorrichtungen - eine Veränderung der hierfür von der Bedienperson am Kupplungspedal aufzubringenden Kräfte bedingen würde.

Prinzipiell sind bei Reihenschaltung von Geberkolben und Stellkolben zwei Schaltungsvarianten denkbar: Zum einen kann der Stellkolben zwischen dem Geberkolben und dem Nehmerkolben angeordnet sein (Patentanspruch 1), zum anderen kann der Geberkolben zwischen dem Stellkolben und dem Nehmerkolben angeordnet sein (Patentanspruch 2). Bei der ersten Schaltungsvariante unterteilt der Stellkolben die Flüssigkeitssäule zwischen dem Geberkolben und dem Nehmerkolben in einen Geberabschnitt zwischen Geberkolben und Stellkolben und einen Nehmerabschnitt zwischen Stellkolben und Nehmerkolben, während bei der zweiten Schaltungsvariante der Geberkolben die Flüssigkeitssäule zwischen dem Stellkolben und dem Nehmerkolben in einen Servoabschnitt zwischen Stellkolben und Geberkolben und einen Druckabschnitt zwischen Geberkolben und Nehmerkolben unterteilt. In beiden Fällen findet also eine Kreistrennung durch einen Kolben statt, was Druckräume zu beiden Seiten des jeweiligen Kolbens erfordert. Bei der ersten Schaltungsvariante - Stellkolben zwischen Geberkolben und Nehmerkolben - kann vorteilhaft ein herkömmlicher, kompakter Geberzylinder zum Einsatz kommen, so daß sich insbesondere diese Schaltungsvariante auch hervorragend für eine sogenannte "add on"-Lösung eignet, bei der z.B. eine am Markt befindliche, gattungsgemäße Betätigungsvorrichtung erfindungsgemäß um eine Stelleinheit und eine Steuereinheit ergänzt wird und demgemäß zur Betätigung einer Kupplung, die im Verhältnis hohe Drehmomente zu übertragen hat, umgerüstet werden kann. Auch sind so Baukastensysteme denkbar, mit einem Satz von Nehmerzylindern, einem Satz von Geberzylindern und einer Stelleinheit mit entsprechender Steuereinheit, wobei jeweils ein Nehmerzylinder mit einem der Geberzylinder und darüber hinaus optional mit der Baugruppe Stelleinheit/Steuereinheit kombiniert werden kann, so daß hier eine ganze Bandbreite von verschiedenen Kupplungen mit unterschiedlichem Drehmomentübertragungsvermögen von der Betätigungsseite her abgedeckt werden kann.

Bei der zweiten Schaltungsvariante - Geberkolben zwischen Stellkolben und Nehmerkolben - muß ein gegenüber einer herkömmlichen Betätigungsvorrichtung geänderter Geberzylinder zum Einsatz kommen, der zwei Druckräume aufweist. Hierfür kann - verglichen mit der ersten Schaltungsvariante - allerdings die Stelleinheit mit nur einem Druckraum einfacher und kompakter ausgebildet werden. Darüber hinaus eignet sich diese Schaltungsvariante sehr gut für Einbausituationen, bei denen der Geberzylinder und der Nehmerzylinder aufgrund der örtlichen Nähe von Pedalblock und Kupplung dicht beieinanderliegen, insofern eine Zwischenschaltung der Stelleinheit zwischen Geberzylinder und Nehmerzylinder möglicherweise Probleme bereiten könnte.

Beiden erfindungsgemäßen Schaltungsvarianten ist darüber hinaus gemein, daß die räumliche Lage der Stelleinheit in vorteilhafter Weise unabhängig von der Lage sowohl des Geberzylinders als auch des Nehmerzylinders gewählt werden kann, wodurch eine große Flexibilität hinsichtlich der Möglichkeiten der Anordnung der Stelleinheit gegeben ist. Dies ist insbesondere bei modernen Personenkraftwagen von Vorteil, welche in der Regel eine Vielzahl von Aggregaten aufweisen, die im Motorraum unterzubringen sind.

Da des weiteren der Elektromotor der Stelleinheit zur Kraftbeaufschlagung bzw. Verschiebung des Stellkolbens über das Getriebe vermittels der Steuereinheit in Abhängigkeit von einer der Gebergrößen, sprich dem Geberweg, oder einer dazu im wesentlichen proportionalen Größe ansteuerbar ist, kann stets gewährleistet werden, daß die Stelleinheit bei der Kupplungsbetätigung gerade eine solche Kraft beisteuert, die bewirkt, daß sich die jeweilige Gebergröße für die Bedienperson vom Pedalgefühl her nicht von der entsprechenden Gebergröße bei der Betätigung einer herkömmlichen hydraulischen Betätigungsvorrichtung unterscheidet, obwohl eine Kupplung ausgerückt wird, die höhere Drehmomente überträgt und dementsprechend höhere Ausrückkräfte erfordert.

Nicht zuletzt ergeben sich Vorteile daraus, daß erfindungsgemäß ein direkter mechanischer Angriff eines Stellmotors am Geberkolben, wie er z.B. aus der eingangs zitierten US 5,094,079 bekannt ist, gerade vermieden wird. Zum einen kann somit bei der erfindungsgemäßen Betätigungsvorrichtung nämlich ein Geberzylinder eingesetzt werden, der keinen übermäßig großen Bauraum am Pedalblock für das Kupplungspedal beansprucht. Zum anderen sorgt die hydraulische Verbindung zwischen Stelleinheit und Geberzylinder für ein - verglichen mit dem obigen Stand der Technik - weniger steifes System bzw. eine bestimmte "Weichheit" im System, aufgrund der es zu einer gewissen Verzögerung des Druckaufbaus kommen und die ggf. im Hinblick auf eine Schwingungsoptimierung des hydraulischen Betätigungssystems genutzt werden kann.

KURZE BESCHREIBUNG DER ZEICHNUNGEN

Im folgenden wird die Erfindung anhand bevorzugter Ausführungsbeispiele unter Bezugnahme auf die beigefügten schematischen Zeichnungen näher erläutert, wobei gleiche oder entsprechende Teile mit den gleichen Bezugszeichen versehen sind. In den Zeichnungen zeigen:

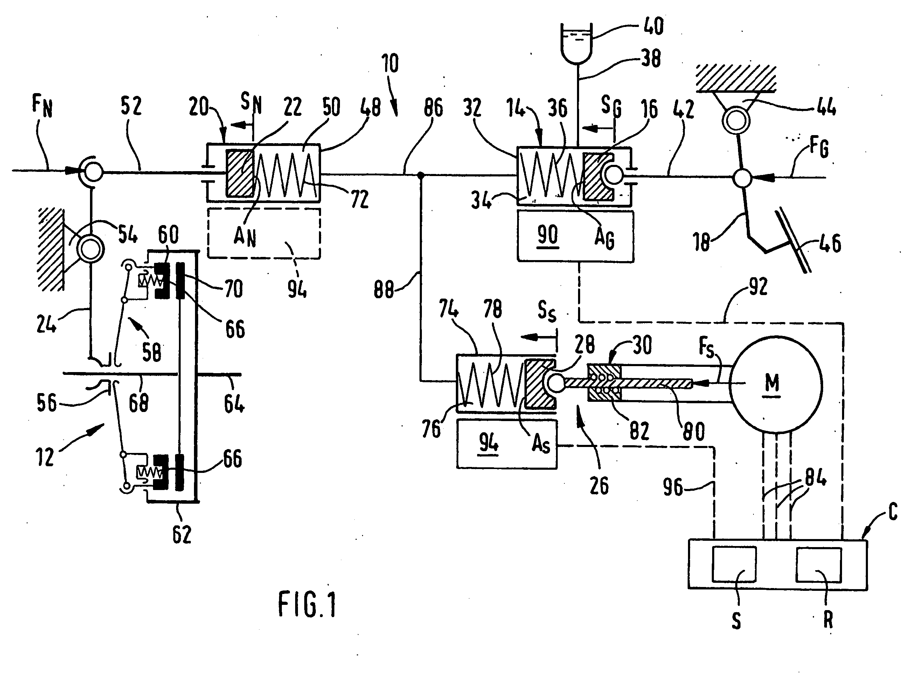

Fig. 1    ein Schaltbild einer hydraulischen Betätigungsvorrichtung für eine Kraftfahrzeug-Reibkupplung nach einem ersten Ausführungsbeispiel, bei dem ein Geberkolben eines Geberzylinders mit einem Stellkolben einer elektromechanischen Stelleinheit bezüglich eines Nehmerkolbens eines Nehmerzylinders hydraulisch parallel geschaltet ist,

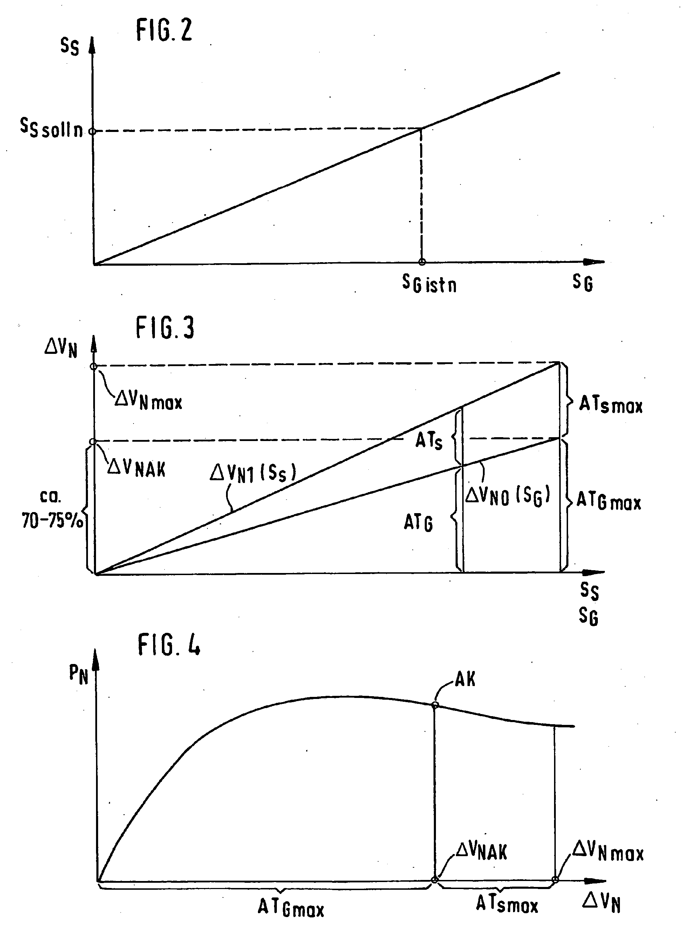

Fig. 2     ein zur Erläuterung des ersten Ausführungsbeispiels dienendes erstes Diagramm, in dem der Stellweg $s_S$ des Stellkolbens in der Stelleinheit als Funktion des Geberwegs $s_G$ des Geberkolbens im Geberzylinder aufgetragen ist,

Fig. 3     ein zur Erläuterung des ersten Ausführungsbeispiels dienendes zweites Diagramm, in dem die Volumenaufnahme $\Delta V_N$ des Nehmerzylinders als Funktion des Stellwegs $s_s$ des Stellkolbens in der Stelleinheit bzw. des Geberwegs $s_G$ des Geberkolbens aufgetragen ist,

Fig. 4     ein zur Erläuterung des ersten Ausführungsbeispiels dienendes drittes Diagramm, in dem der im Nehmerzylinder herrschende Nehmerdruck $p_N$ als Funktion der Volumenaufnahme $\Delta V_N$ des Nehmerzylinders aufgetragen ist,

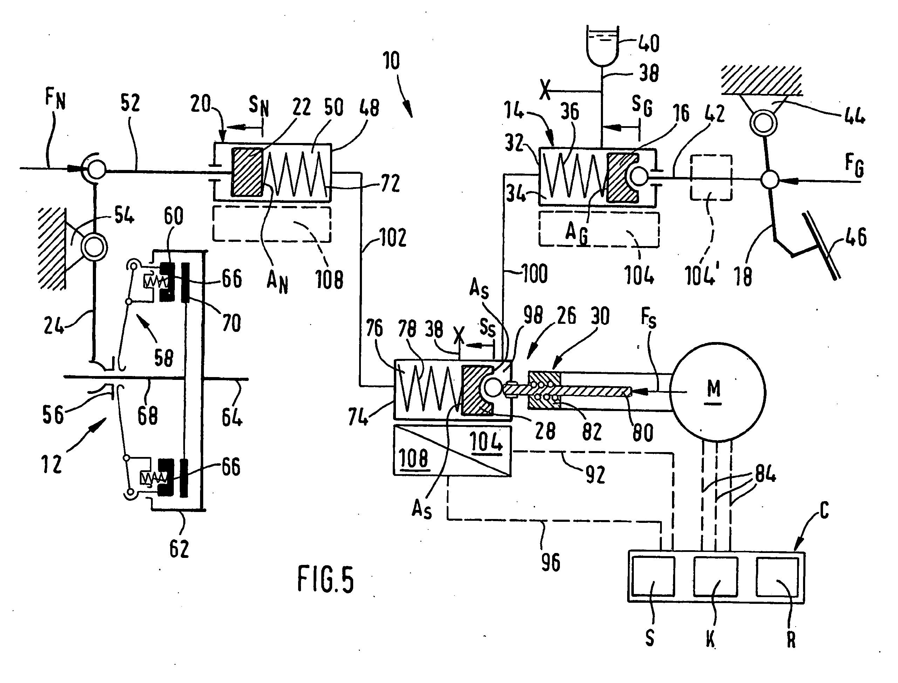

Fig. 5     ein Schaltbild einer hydraulischen Betätigungsvorrichtung für eine Kraftfahrzeug-Reibkupplung nach einem zweiten Ausführungsbeispiel, bei dem der Geberkolben des Geberzylinders mit dem Stellkolben der elektromechanischen Stelleinheit und dem Nehmerkolben des Nehmerzylinders hydraulisch in Reihe geschaltet ist, wobei sich der Stellkolben zwischen dem Geberkolben und dem Nehmerkolben befindet,

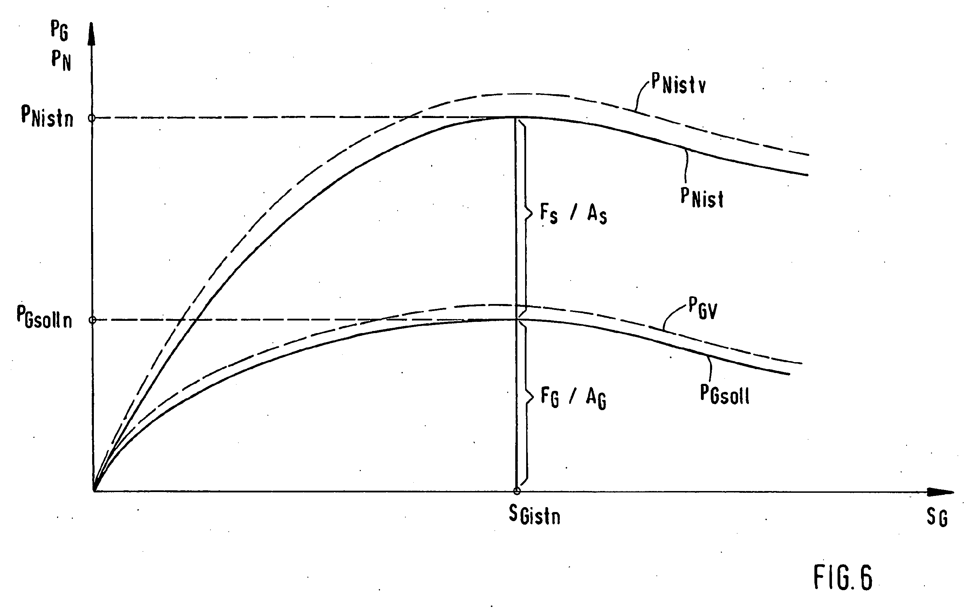

Fig. 6     ein zur Erläuterung des zweiten Ausführungsbeispiels dienendes Diagramm, in dem der im Geberzylinder herrschende Geberdruck $p_G$ und der im Nehmerzylinder herrschende Nehmerdruck $p_N$ als Funktion des Geberwegs $s_G$ des Geberkolbens im Geberzylinder aufgetragen sind,

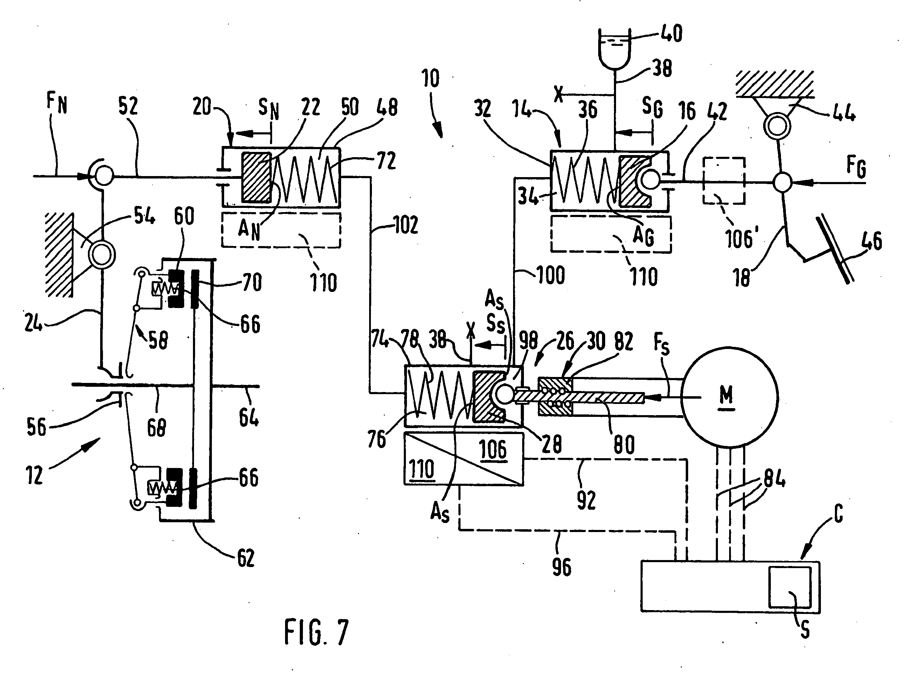

Fig. 7     ein Schaltbild einer erfindungsgemäßen hydraulischen Betätigungsvorrichtung für eine Kraftfahrzeug-Reibkupplung nach einem dritten Ausführungsbeispiel, welches sich von dem zweiten Ausführungsbeispiel gemäß Fig. 5 nur im Hinblick auf die Sensorausbildung und das Regelprinzip unterscheidet,

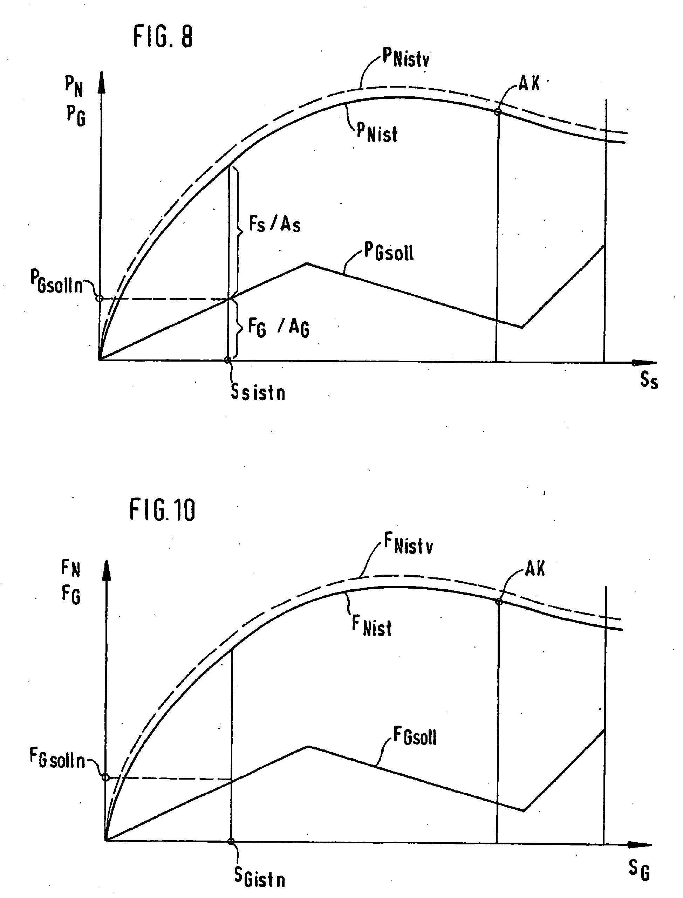

Fig. 8     ein zur Erläuterung des dritten Ausführungsbeispiels dienendes Diagramm, in dem der im Nehmerzylinder herrschende Nehmerdruck $p_N$ und ein in einem Speicherglied einer Steuereinheit abgelegter Wunschverlauf für den Geberdruck $p_G$ im Geberzylinder als Funktion des Stellwegs $s_S$ des Stellkolbens in der Stelleinheit aufgetragen sind,

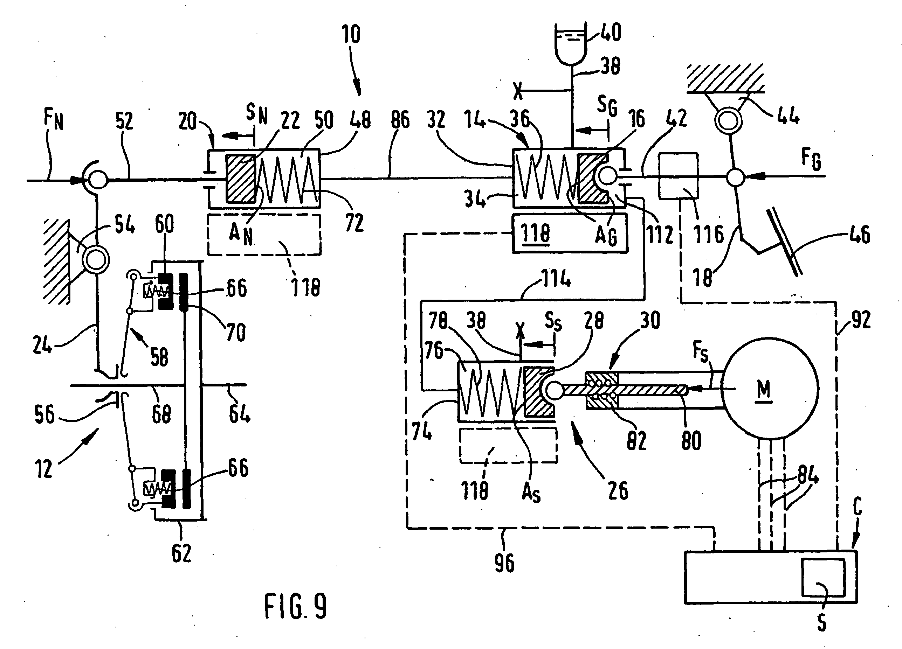

Fig. 9     ein Schaltbild einer erfindungsgemäßen hydraulischen Betätigungsvorrichtung für eine Kraftfahrzeug-Reibkupplung nach einem vierten Ausführungsbeispiel, bei dem der Geberkolben des Geberzylinders mit dem Stellkolben der elektromechanischen Stelleinheit und dem Nehmerkolben des Nehmerzylinders hydraulisch in Reihe geschaltet ist, wobei sich der Geberkolben zwischen dem Stellkolben und dem Nehmerkolben befindet, und

Fig. 10     ein zur Erläuterung des vierten Ausführungsbeispiels dienendes Diagramm, in dem die am Nehmerzylinder wirkende Nehmerkraft $F_N$ und ein in dem Speicherglied der Steuereinheit abgelegter Wunschverlauf für die am Geberzylinder wirkende Geberkraft $F_G$ als Funktion des Geberwegs $s_G$ des Geberkolbens im Geberzylinder aufgetragen sind.

DETAILLIERTE BESCHREIBUNG DER AUSFÜHRUNGSBEISPIELE

Die Fig. 1, 5, 7 und 9 zeigen jeweils eine hydraulische Betätigungsvorrichtung 10 für eine Kraftfahrzeug-Trockenreibkupplung - nachfolgend kurz Kupplung 12 genannt - in ihrer Grundstellung, d.h. dem unbetätigten Zustand, in dem die Kupplung 12 eingerückt ist. Diese Betätigungsvorrichtungen 10 umfassen jeweils in an sich bekannter Weise einen Geberzylinder 14 mit einem Geberkolben 16, der über ein Betätigungsorgan - in den dargestellten Ausführungsbeispielen ein Kupplungspedal 18 - als. Gebergrößen mit einer Geberkraft $F_G$ beaufschlagt und um einen Geberweg $s_G$ verschoben werden kann, und einen Nehmerzylinder 20, der einen mit dem Geberkolben 16 über eine Flüssigkeitssäule hydraulisch in Reihe geschalteten Nehmerkolben 22 aufweist, welcher mit einem Ausrückorgan - in den dargestellten Ausführungsbeispielen ein Ausrückhebel 24 - der Kupplung 12 wirkverbunden ist. Den Betätigungsvorrichtungen 10 gemäß den Fig. 1, 5, 7 und 9 ist des weiteren gemein, daß sie jeweils eine elektromechanische Stelleinheit 26 mit einem Stellkolben 28 aufweisen, der über ein mittels eines Elektromotors M antreibbares Getriebe 30 mit einer Stellkraft $F_s$ beaufschlagt und um einen Stellweg $s_S$ verschoben werden kann. Während bei dem ersten Ausführungsbeispiel gemäß Fig. 1 der Stellkolben 28 bezüglich des Nehmerkolbens 22 hydraulisch parallel zum Geberkolben 16 geschaltet ist, ist bei dem zweiten bis vierten Ausführungsbeispiel gemäß den Fig. 5, 7 und 9 der Stellkolben 28 mit dem Geberkolben 16 und dem Nehmerkolben 22 hydraulisch in Reihe geschaltet. Schließlich haben alle Betätigungsvorrichtungen 10 eine Steuereinheit C, mittels der der Elektromotor M der Stelleinheit 26 in Abhängigkeit von einer der Gebergrößen $F_G$, $s_G$

oder einer dazu im wesentlichen proportionalen Größe derart ansteuerbar ist, daß, wie nachfolgend noch ausführlich erläutert werden wird, im Falle der Reihenschaltung von Geberkolben 16 und Stellkolben 28 (Fig. 5, 7 und 9) durch Kraftbeaufschlagung des Stellkolbens 28 über das Getriebe 30 die auf die Flüssigkeitssäule zwischen Geberkolben 16 und Nehmerkolben 22 wirkende Kraft definiert erhöht werden kann, oder im Falle der Parallelschaltung von Geberkolben 16 und Stellkolben 28 (Fig. 1) durch Verschiebung des Stellkolbens 28 über das Getriebe 30 das Volumen der Flüssigkeitssäule zwischen Geberkolben 16 und Nehmerkolben 22 definiert vergrößert werden kann.

Der Geberzylinder 14 weist in an sich bekannter Weise ein Zylindergehäuse 32 auf, in dem der Geberkolben 16 längsverschieblich und gegenüber der Innenumfangsfläche des Zylindergehäuses 32 mittels hier nicht dargestellter Dichtmittel abgedichtet geführt ist, wobei der Geberkolben 16 im Zylindergehäuse 32 einen Druckraum 34 druckdicht und variabel begrenzt. Im Druckraum 34 ist eine Rückstellfeder 36 - in den dargestellten Ausführungsbeispielen in der Form einer Schraubendruckfeder - angeordnet, mittels der der Geberkolben 16 in seine in den Fig. 1, 5, 7 und 9 dargestellte Grundstellung vorgespannt ist, in der der Druckraum 34 über eine Nachlaufleitung 38 mit einem Vorratsbehälter 40 für die Hydraulikflüssigkeit hydraulisch verbunden ist, so daß in der Grundstellung des Geberkolbens 16 u.a. etwaige Verluste an Hydraulikflüssigkeit im hydraulischen System ausgeglichen werden und auch eine Entlüftung desselben über den Vorratsbehälter 40 erfolgen kann.

Auf der vom Druckraum 34 abgewandten Seite des Geberkolbens 16 ist eine Kolbenstange 42 vorgesehen, die mit ihrem einen Ende am Geberkolben 16 angreift und mit ihrem anderen Ende am Kupplungspedal 18 angelenkt ist. Das Kupplungspedal 18 selbst ist in an sich bekannter Weise mit seinem einen Ende an einem in den Fig. 1, 5, 7 und 9 lediglich schematisch angedeuteten Pedalbock 44 des Kraftfahrzeugs verschwenkbar gelagert und weist an seinem anderen Ende eine Druckplatte 46 auf, über die die Bedienperson Betätigungskräfte am Kupplungspedal 18 aufbringen kann. Es ist ersichtlich, daß die Bedienperson durch Aufbringung von Betätigungskräften an der Druckplatte 46 des Kupplungspedals 18 - üblicherweise das Niedertreten des Kupplungspedals 18 - mit einer durch die Geometrie und die Abmessungen des Kupplungspedals 18 sowie die räumliche Lage der Gelenkpunkte zwischen Kupplungspedal 18 und Pedalbock 44 bzw. Kolbenstange 42 definierten Hebelübersetzung über die Kolbenstange 42 eine bestimmte Geberkraft $F_G$ am Geberkolben 16 erzeugen und diesen um einen bestimmten Geberweg $s_G$ verschieben kann.

Bei dem Nehmerzylinder 20 handelt es sich in den dargestellten Ausführungsbeispielen um eine "klassische" Kolben-Zylinder-Anordnung - im Gegensatz zu einem sogenannten "Zentralausrücker", wie er z.B. in der DE 102 22 730 A1 der Anmelderin beschrieben wird, und der hier alternativ zum Einsatz kommen könnte - mit einem Zylindergehäuse 48, in dem der Nehmerkolben 22 längsverschieblich und gegenüber der Innenumfangsfläche des Zylindergehäuses 48 mittels hier nicht gezeigter Dichtmittel abgedichtet geführt ist, um im Zylindergehäuse 48 einen Druckraum 50 druckdicht und variabel zu begrenzen. Auf der vom Druckraum 50 abgewandten Seite des Nehmerkolbens 22 ist eine Druckstange 52 am Nehmerkolben 22 befestigt, die mit ihrem vom Nehmerkolben 22 abgewandten Ende an dem in den Fig. 1, 5, 7 und 9 oberen Ende des Ausrückhebels 24 angreift.

Der Ausrückhebel 24 selbst ist in an sich bekannter Weise verschwenkbar an einem in den Fig. 1, 5, 7 und 9 lediglich schematisch angedeuteten Umlenkbock 54 gelagert und greift mit seinem in diesen Figuren unteren Ende an einem ebenfalls nur schematisch gezeichneten Ausrücklager 56 der Kupplung 12 an. Das Ausrücklager 56 ist über einen ebenfalls an sich bekannten Ausrückmechanismus 58 mit einer axial beweglichen Druckplatte 60 wirkverbunden, die zusammen mit dem Ausrückmechanismus 58 an einem Schwungrad 62 befestigt ist, welches seinerseits drehfest an einer Kurbelwelle 64 einer Verbrennungskraftmaschine (nicht dargestellt) angebracht ist. Der Ausrückmechanismus 58 weist des weiteren Anpreßfedern 66 - die eigentlichen Kupplungsfedern - auf, die im Ruhezustand der Kupplung 12 die Druckplatte 60 gegen eine in an sich bekannter Weise Reibbeläge tragende und drehfest an einer Getriebeeingangswelle 68 angebrachte Mitnehmer- oder Kupplungsscheibe 70 pressen und somit letztere gegen das Schwungrad 62 drücken, so daß im eingerückten Zustand der Kupplung 12 ein Reibschluß zwischen Schwungrad 62, Kupplungsscheibe 70 und Druckplatte 60 besteht, der für eine Drehmomentübertragung von der Kurbelwelle 64 auf die Getriebeeingangswelle 68 sorgt.

Der Nehmerzylinder 20 hat ferner eine im Druckraum 50 angeordnete Vorlastfeder 72 - in den dargestellten Ausführungsbeispielen wiederum in der Form einer Schraubendruckfeder - mittels der der Nehmerkolben 22 in seine in den Fig. 1, 5, 7 und 9 etwas übertrieben weit links dargestellte Ruhestellung vorgespannt ist. Im Ergebnis sorgt die Vorlastfeder 72, deren Federkraft so gewählt ist, daß sie die Federkraft der Anpreßfedern 66 nicht zu überwinden vermag, über die Druckstange 52 und den Ausrückhebel 24 für eine dauernde leichte Anlage des Ausrücklagers 56 an den weiteren Ausrückelementen der Kupplung 12, so daß zwischen diesen Bauteilen kein Spiel vorhanden ist. Auch bewirkt die Vorlastfeder 72 somit ein ständiges Mitlaufen des Ausrücklagers 56 mit den sich drehenden Bauteilen der Kupplung 12, was den Verschleiß des Ausrücklagers 56 gegenüber einer Konstruktion, bei der das Ausrücklager beim Aus- bzw. Einrückvorgang der Kupplung beschleunigt bzw. abgebremst werden würde, stark vermindert.

Es ist ersichtlich, daß infolge der einander entgegengerichteten Federkräfte der Vorlastfeder 72 und der Anpreßfedern 66 sowie der Hebelübersetzungen über den Ausrückhebel 24 und den Ausrückmechanismus 58 eine bestimmte, sich über den Hub bzw. Nehmerweg $s_N$ des Nehmerkolbens 22 ändernde Widerstandskraft, hier Nehmerkraft $F_N$ genannt, vorliegt, die es durch Druckbeaufschlagung des Druckraums 50 mit einem Nehmerdruck $p_N$ zu überwinden gilt, um den Nehmerkolben 22 in den Fig. 1, 5, 7 und 9 nach links zu bewegen und somit die Kupplung 12 auszurücken, d.h. die Druckplatte 60 von der Kupplungsscheibe 70 und somit die Verbrennungskraftmaschine vom Getriebe (beides nicht gezeigt) zu trennen. Den Fig. 4, 6, 8 und 10 sind solche typische, der jeweiligen Kupplung 12 immanente Verläufe des Nehmerdrucks $p_N$ bzw. der Nehmerkraft $F_N$ - auch Kupplungskennlinien genannt - aufgetragen über der Volumenaufnahme $\Delta V_N$ des Nehmerzylinders 20 (Fig. 4), dem Hub bzw. Geberweg $s_G$ des Geberkolbens 16 (Fig. 6 und 10) und dem Hub bzw. Stellweg $s_S$ des Stellkolbens 28 der Stelleinheit 26 (Fig. 8), für verschiedene Ausführungsbeispiele der hydraulischen Betätigungsvorrichtung 10 zu entnehmen.

Auch die Stelleinheit 26 hat ein Zylindergehäuse 74, in dem der Stellkolben 28 längsverschieblich und gegenüber der Innenumfangsfläche des Zylindergehäuses 74 mittels geeigneter, hier nicht dargestellter Dichtmittel abgedichtet geführt ist, so daß der Stellkolben 28 in sämtlichen Ausführungsbeispielen auf seiner in den Fig. 1, 5, 7 und 9 linken Seite einen Druckraum 76 druckdicht und variabel begrenzt. In dem Druckraum 76 der Stelleinheit 26 ist eine Vorspannfeder 78 - in den dargestellten Ausführungsbeispielen erneut in der Form einer Schraubendruckfeder - angeordnet, die den Stellkolben 28 in den Fig. 1, 5, 7 und 9 nach rechts vorspannt.

Auf der in den Fig. 1, 5, 7 und 9 rechten Seite des Stellkolbens 28 ist das Getriebe 30 auf nicht näher gezeigte Weise am oder im Zylindergehäuse 74 befestigt. Bei dem Getriebe 30 handelt es sich in den dargestellten Ausführungsbeispielen um einen Spindeltrieb, genauer einen handelsüblichen, leichtgängigen Kugelgewindetrieb, mit einer Kugelrollspindel 80, der eine Spindelmutter 82 zugeordnet ist bzw. die in letzterer läuft. Während die Kugelrollspindel 80 auf in den Fig. 1, 5, 7 und 9 nicht näher dargestellte Weise gegen ein Verdrehen gegenüber dem Zylindergehäuse 74 gesichert ist, kann die Spindelmutter 82 mittels des Elektromotors M drehend angetrieben werden. Bei dem Elektromotor M der Stelleinheit 26 handelt es sich bevorzugt um einen bürstenlosen Gleichstrommotor, der sich durch eine hervorragende Dynamik, einen hohen Wirkungsgrad bzw. eine hohe Leistungsdichte, einen geringen Verschleiß und damit eine lange Lebensdauer, eine gute überlastfähigkeit, ein geringes Gewicht und nicht zuletzt eine geringe Geräuschentwicklung auszeichnet. Zu der Stelleinheit 26 ist schließlich strukturell noch anzumerken, daß die Vorspannfeder 78 im Druckraum 76 bestrebt ist, den Stellkolben 28 in Anlage an dem in den Fig. 1, 5, 7 und 9 linken Ende der Kugelrollspindel 80 zu halten, welches nicht fest mit dem Stellkolben 28 verbunden ist.

Vermittels der Steuereinheit C kann über Stromleitungen 84 ein elektrischer Strom von vorbestimmter Stromstärke I und Spannung U an den Elektromotor M angelegt werden, was bewirkt, daß dieser die Spindelmutter 82 um einen definierten Drehwinkel in einer definierten Drehrichtung mit einem definierten Drehmoment verdreht. Die Drehbewegung der Spindelmutter 82 wird dabei in Abhängigkeit von der Spindelsteigung in eine translatorische Bewegung der Kugelrollspindel 80 transformiert, so daß das Getriebe 30 entsprechend der Drehwinkelstellung der Spindelmutter 82 über die Kugelrollspindel 80 einen Stellweg $s_S$ am Stellkolben 28 erzeugen kann. Außerdem wird das an der Spindelmutter 82 über den Elektromotor M aufgebrachte Drehmoment in Abhängigkeit von der Spindelsteigung in eine an der Kugelrollspindel 80 angreifende Stellkraft $F_S$ umgeformt, die bei Anlage des Stellkolbens 28 an der Kugelrollspindel 80 auch auf den Stellkolben 28 wirkt und einen hydraulischen Druck in dem Druckraum 76 der Stelleinheit 26 generieren kann.

Bei dem ersten Ausführungsbeispiel der hydraulischen Betätigungsvorrichtung 10 sind der Geberzylinder 14, der Nehmerzylinder 20 und die Stelleinheit 26 gemäß Fig. 1 wie folgt miteinander verschaltet. Zunächst ist der Geberzylinder 14 mit dem Nehmerzylinder 20, genauer der Druckraum 34 des Geberzylinders 14 mit dem Druckraum 50 des Nehmerzylinders 20 mittels einer ersten Druckleitung 86 hydraulisch verbunden, in der die Flüssigkeitssäule zwischen dem Geberkolben 16 und dem Nehmerkolben 22 verschiebbar ist. Sodann ist die Stelleinheit 26, genauer deren Druckraum 76 zur Parallelschaltung von Geberkolben 16 und Stellkolben 28 über eine zweite Druckleitung 88 hydraulisch an die erste Druckleitung 86 angeschlossen. Im Ergebnis kann durch Verschiebung des Stellkolbens 28 über das mittels des Elektromotors M antreibbare Getriebe 30 das Volumen der Flüssigkeitssäule zwischen dem Geberkolben 16 und dem Nehmerkolben 22 definiert vergrößert werden. Infolgedessen ist es möglich, unter Beibehaltung eines herkömmlich dimensionierten Geberzylinders 14 den Nehmerzylinder 20 so zu vergrößern, daß der Nehmerkolben 22 eine größere hydraulische Wirkfläche aufweist, so daß im wesentlichen unter Beibehaltung des üblichen Druckniveaus in den Druckräumen 34, 50 des Geberzylinders 14 bzw. des Nehmerzylinders 20 und der Druckleitung 86 über die vergrößerte hydraulische Wirkfläche des Nehmerkolbens 22 eine größere Nehmerkraft $F_N$ aufgebracht werden kann, die es gestattet, Kupplungen 12 auszurücken, deren Anpreßfedern 66 zur Übertragung höherer Drehmomente durch die Kupplung 12 stärker als herkömmlich dimensioniert sind.

Wie des weiteren der Fig. 1 entnommen werden kann, ist am Geberzylinder 14 eine erste Sensoreinrichtung 90 vorgesehen, die über eine Signalleitung 92 an die Steuereinheit C angeschlossen, d.h. mit dieser signalverbunden ist. Ferner ist an der Stelleinheit 26 eine zweite Sensoreinrichtung 94 angeordnet, die ebenfalls über eine Signalleitung 96 mit der Steuereinheit C signalverbunden ist. Die erste Sensoreinrichtung 90 dient im ersten Ausführungsbeispiel der Erfassung des Geberwegs $s_{Gist}$ als Führungsgröße für die Regelung des Elektromotors M über die Steuereinheit C und kann beispielsweise wie in der DE 203 15 735 U1 der Anmelderin beschrieben ausgebildet sein. Mittels der zweiten Sensoreinrichtung 94 ist der Stellweg $s_{Sist}$ des Stellkolbens 28 der Stelleinheit 26 als Regelgröße erfaßbar. Auch die zweite Sensoreinrichtung 94 kann prinzipiell wie in der DE 203 15 735 U1 der Anmelderin beschrieben ausgebildet sein.

Wie in der Fig. 1 mit gestrichelten Linien am Nehmerzylinder 20 angedeutet, kann die zweite Sensoreinrichtung 94 alternativ auch der Erfassung des Nehmerwegs $s_N$ des Nehmerkolbens 22 im Nehmerzylinder 20 dienen. Bevorzugt ist jedoch die Anordnung der zweiten Sensoreinrichtung 94 an der Stelleinheit 26, weil diese somit als "add on"-Baugruppe schon (wenigstens) einen Teil der für die Regelung erforderlichen Sensorik mitbringen kann.

Wie nachfolgend anhand der Fig. 2 bis 4 noch näher erläutert werden soll, ist nun in der Steuereinheit C in Abhängigkeit von dem erfaßten Geberweg $s_{Gist}$ des Geberkolbens 16 ein Soll-Wert für den Stellweg $s_{Ssoll}$ des Stellkolbens 28 (bzw. den Nehmerweg $s_{Nsoll}$ des Nehmerkolbens 22) ermittelbar, worauf der ermittelte Stellweg $s_{Ssoll}$ des Stellkolbens 28 (bzw. Nehmerweg $s_{Nsoll}$ des Nehmerkolbens 22) über den von der Steuereinheit C wie oben beschrieben angesteuerten Elektromotor M der Stelleinheit 26 einregelbar ist.

Hierfür weist die Steuereinheit C ein Rechenglied R auf, mittels dessen der Soll-Wert für den Stellweg $s_{Ssoll}$ des Stellkolbens 28 (bzw. den Nehmerweg $s_{Nsoll}$ des Nehmerkolbens 22) nach folgender Beziehung ermittelbar ist:

$$s_{Ssoll} = k_U * s_{Gist} \quad (\text{bzw. } s_{Nsoll} = k_U * s_{Gist})$$

mit

$s_{Gist}$: dem vermittels der ersten Sensoreinrichtung 90 erfaßten Geberweg des Geberkolbens 16 und
$k_U$: einem in einem Speicherglied S der Steuereinheit C abgelegten Übersetzungsfaktor.

Ist der Übersetzungsfaktor $k_U$ konstant, was im Hinblick auf eine geringe Komplexität der Steuereinheit C bzw. der damit bewirkten Regelung von Vorteil ist, ergibt sich der Verlauf des Stellwegs $s_S$ aufgetragen über dem Geberweg $s_G$ gemäß Fig. 2 als Gerade. Über die Steuereinheit C wird, wie die Fig. 2 veranschaulicht, also einem bestimmten, mittels der ersten Sensoreinrichtung 90 erfaßten Geberweg $s_{Gistn}$ ein bestimmter Stellweg $s_{Ssolln}$ zugeordnet, den es durch geeignete Ansteuerung des Elektromotors M der Stelleinheit 26 einzuregeln gilt, so daß der mittels der zweiten Sensoreinrichtung 94 erfaßte Ist-Wert für den Stellweg $s_{Sist}$ mit dem jeweils vorgegebenen Soll-Wert für den Stellweg $s_{Ssoll}$ übereinstimmt. Mit anderen Worten gesagt folgt der Stellkolben 28 der Stelleinheit 26 dem durch die Bedienperson vorgegebenen Hub bzw. Geberweg $s_G$ des Geberkolbens 16 in einer proportionalen Beziehung.

Mit zunehmendem Geberweg $s_G$ des Geberkolbens 16 wird also mehr Volumen an Hydraulikflüssigkeit durch die Stelleinheit 26 in die Flüssigkeitssäule zwischen Geberkolben 16 und Nehmerkolben 22 "eingeschoben". Dies veranschaulicht die Fig. 3, in der die Volumenaufnahme $\Delta V_N$ des Nehmerzylinders 20, also das ausgehend von der Ruhestellung des Nehmerzylinders 20 über dessen Druckanschluß in den Druckraum 50 des Nehmerzylinders 20 einströmende Volumen an Hydraulikflüssigkeit über dem Stellweg $s_S$ des Stellkolbens 28 bzw. dem Geberweg $s_G$ des Geberkolbens 16 aufgetragen ist. Die obere Linie $\Delta V_{N1}$ steht hierbei für die Volumenaufnahme $\Delta V_N$ des Nehmerzylinders 20, die sich bei einer Kupplungsbetätigung infolge der Volumenverdrängung aus den Druckräumen 34, 76 des Geberzylinders 14 und der Stelleinheit 26 ergibt, während die untere Linie $\Delta V_{N0}$ für die Volumenaufnahme $\Delta V_N$ des Nehmerzylinders 20 steht, die sich bei einer Kupplungsbetätigung alleine infolge der Volumenverdrängung aus dem Druckraum 34 des Geberzylinders 14 ergeben würde, wenn es z.B. zu einem Ausfall der Stelleinheit 26 käme. Es ist ersichtlich, daß sich die Volumenaufnahme $\Delta V_N$ des Nehmerzylinders 20 bei einer normalen Kupplungsbetätigung mittels der hydraulischen Betätigungsvorrichtung 10 quasi aus zwei Anteilen $AT_G$, $AT_S$ zusammensetzt, nämlich einem Anteil $AT_G$ infolge der Volumenverdrängung aus dem Druckraum 34 des Geberzylinders 14 und einem Anteil $AT_S$ infolge der parallelen Volumenverdrängung aus dem Druckraum 76 der Stelleinheit 26, wobei das Verhältnis der Anteile $AT_G : AT_S$ bei der Kupplungsbetätigung im wesentlichen konstant bleibt.

Durch Einschieben eines Volumens an Hydraulikflüssigkeit in den Druckraum 50 des Nehmerzylinders 20 wird der Nehmerkolben 22 in Fig. 1 nach links verschoben, so daß die Kupplung 12 über die Druckstange 52 und den Ausrückhebel 24 in an sich bekannter Weise ausgerückt wird. Die hierfür benötigte Nehmerkraft $F_N$ und damit der erforderliche, im Druckraum 50 des Nehmerzylinders 20 aufzubringende Nehmerdruck $p_N$ ändert sich, wie weiter oben bereits angesprochen, in Abhängigkeit von der Auslegung der jeweiligen Kupplung 12 mit dem Nehmerweg $s_N$ des Nehmerkolbens 22, der sich proportional zur Volumenaufnahme $\Delta V_N$ des Nehmerzylinders 20 verhält. Diese Kupplungskennlinie ($p_N = f(\Delta V_N)$) ist in Fig. 4 gezeigt.

Um ein "fail-safe"-Verhalten der hydraulischen Betätigungsvorrichtung 10 zu gewährleisten, d.h. sicherzustellen, daß die Kupplung 12 auch dann (gerade) noch ausgerückt werden kann, wenn die Stelleinheit 26 z.B. aufgrund eines Versagens der Elektrik ausgefallen ist, ist die hydraulische Betätigungsvorrichtung 10 im Hinblick auf das Verhältnis der Volumenanteile $AT_G : AT_S$, die durch den Geberzylinder 14 bzw. die Stelleinheit 26 aufgebracht werden, vorzugsweise so ausgelegt, daß das mittels der Stelleinheit 26 maximal beisteuerbare Volumen $AT_{Smax}$ an Hydraulikflüssigkeit limitiert ist oder, mit anderen Worten gesagt, daß das aus dem Druckraum 34 des Geberzylinders 14 mittels des Geberkolbens 16 maximal verdrängbare Volumen $AT_{Gmax}$ (gerade) dazu ausreicht, einen solchen Hub bzw. Nehmerweg

$s_N$ des Nehmerkolbens 22 zu bewirken, daß die Kupplung 12 bis zu ihrem sogenannten Auskuppelpunkt $AK$ (siehe Fig. 4) oder bis wenigstens kurz davor ausgerückt wird. Kurz vor dem Auskuppelpunkt AK wird nur noch ein Bruchteil des maximal übertragbaren Drehmoments von der Kupplung 12 übertragen, so daß hier im Getriebe (nicht gezeigt) ein Gangwechsel schon möglich ist, wenn auch nur unter Ausübung einer gewissen Gewalt. Üblicherweise liegt der Auskuppelpunkt $AK$ bei etwa 70 bis 75 % der maximalen Volumenaufnahme $\Delta V_{Nmax}$ des Nehmerzylinders 20, wie die Fig. 3 und 4 zeigen, so daß das Verhältnis der Volumenanteile $AT_G : AT_S$ vorzugsweise im Bereich von 70 : 30 bis 75 : 25 liegen sollte.

Bliebe zum ersten Ausführungsbeispiel noch anzumerken, daß bei einem Verschleiß der Kupplung 12 ein Eingriff in die Ansteuerung der Stelleinheit 26 mittels der Steuereinheit C nicht notwendig ist. Bei einem Verschleiß der Kupplung 12 nimmt die Dicke der Reibbeläge an der Kupplungsscheibe 70 ab. Infolgedessen schieben die Anpreßfedern 66 das Ausrücklager 56 über den Ausrückmechanismus 58 nach links in Fig. 1. Dies führt dazu, daß der über den Ausrückhebel 24 und die Druckstange 52 gedrückte Nehmerkolben 22 in seiner Ruhestellung in Fig. 1 nach rechts wandert. Insofern nimmt das Gesamtruhevolumen der Flüssigkeitssäule zwischen Geberkolben 16 und Nehmerkolben 22 ab, wobei überschüssige Hydraulikflüssigkeit in der Grundstellung des Geberkolbens 16 über die Nachlaufleitung 38 in den Vorratsbehälter 40 gedrückt wird. Es ändert sich also lediglich das Gesamtruhevolumen der Flüssigkeitssäule, d.h. ein absoluter Volumenbetrag, was weder die Volumenverdrängung aus den Druckräumen 34, 76 des Geberzylinders 14 bzw. der Stelleinheit 26 noch die Volumenaufnahme durch den Druckraum 50 des Nehmerzylinders 20, d.h. die relativen Volumenänderungen bei einer Kupplungsbetätigung berührt. Allerdings steigt wie bei herkömmlichen hydraulischen Betätigungsvorrichtungen die für das Ausrücken der Kupplung 12 über das Kupplungspedal 18 aufzubringende Geberkraft $F_G$ mit zunehmendem Verschleiß der Kupplung 12 in Abhängigkeit von deren Bauart. Auch insofern ändert sich das Pedalgefühl gegenüber herkömmlichen hydraulischen Betätigungsvorrichtungen also nicht.

Während bei dem ersten Ausführungsbeispiel eine hydraulische Parallelschaltung vom Geberkolben 16 und Stellkolben 28 vorliegt, sind in den anderen Ausführungsbeispielen der Geberkolben 16 und der Stellkolben 28 hydraulisch in Reihe geschaltet. So ist bei dem zweiten und dritten Ausführungsbeispiel, die nachfolgend nur insoweit beschrieben werden sollen, als sie sich von dem ersten Ausführungsbeispiel unterscheiden, der Stellkolben 28 zwischen dem Geberkolben 16 und dem Nehmerkolben 22 angeordnet, wobei der Stellkolben 28 die Flüssigkeitssäule zwischen dem Geberkolben 16 und dem Nehmerkolben 22 in einen Geberabschnitt zwischen Geberkolben 16 und Stellkolben 28 und einen Nehmerabschnitt zwischen Stellkolben 28 und Nehmerkolben 22 unterteilt. Hierbei kann durch Kraftbeaufschlagung des Stellkolbens 28 über das mittels des Elektromotors M antreibbare Getriebe 30 die auf den Nehmerabschnitt der Flüssigkeitssäule wirkende Kraft definiert angehoben werden.

Wie die Fig. 5 und 7 zeigen, unterscheiden sich beim zweiten und dritten Ausführungsbeispiel weder der Geberzylinder 14 oder der Nehmerzylinder 20 noch die Kupplung 12 von den entsprechenden Baugruppen bei dem unter Bezugnahme auf die Fig. 1 beschriebenen ersten Ausführungsbeispiel. Bei der Stelleinheit 26 bestehen jedoch einige Unterschiede. Zunächst begrenzt der Stellkolben 28 im Zylindergehäuse 74 auf seiner in den Fig. 5 und 7 rechten Seite druckdicht und variabel einen zweiten Druckraum 98, in den sich die Kugelrollspindel 80 geeignet abgedichtet hineinerstreckt. Ferner ist der Stellkolben 28 mittels der Vorspannfeder 78 in eine Grundstellung vorgespannt, in der der erste Druckraum 76 der Stelleinheit 26 mit dem Vorratsbehälter 40 über eine weitere Nachlaufleitung 38 hydraulisch verbunden ist (in den Fig. 5 und 7 zur Vereinfachung der Darstellung durch ein "X" angedeutet). Im Ergebnis werden die beiden durch den Stellkolben 28 getrennten Hydraulikkreise - der Geberabschnitt bzw. der Nehmerabschnitt der Flüssigkeitssäule zwischen Geberkolben 16 und Nehmerkolben 22 - separat entlüftet und Volumenänderungen in diesen Hydraulikkreisen separat kompensiert.

Des weiteren ist der Druckraum 34 des Geberzylinders 14 über eine Druckleitung 100 an den zweiten Druckraum 98 der Stelleinheit 26 angeschlossen, während deren erster Druckraum 76 über eine weitere Druckleitung 102 an den Druckraum 50 des Nehmerzylinders 20 angeschlossen ist. Es ist ersichtlich, daß bei einer Kupplungsbetätigung der Geberabschnitt der Flüssigkeitssäule in der Druckleitung 100 verschoben wird, während der Nehmerabschnitt der Flüssigkeitssäule in der weiteren Druckleitung 102 verschoben wird.

Auch bei den Betätigungsvorrichtungen 10 gemäß den Fig. 5 und 7 sind jeweils zwei Sensoreinrichtungen 104 bzw. 106 und 108 bzw. 110 vorgesehen, von denen die erste Sensoreinrichtung 104 bzw. 106 dazu dient, eine für den jeweiligen Betätigungszustand des Geberzylinders 14 repräsentative Größe zu erfassen, während die zweite Sensoreinrichtung 108 bzw. 110 dazu dient, eine von der mittels der ersten Sensoreinrichtung 104 bzw. 106 erfaßten Größe verschiedene Größe zu erfassen, wie noch näher erläutert werden wird. Die erste Sensoreinrichtung 104 bzw. 106 ist wiederum über eine Signalleitung 92 an die Steuereinheit C angeschlossen, während die zweite Sensoreinrichtung 108 bzw. 110 über eine weitere Signalleitung 96 mit der Steuereinheit C verbunden ist.

Genauer gesagt ist bei dem zweiten Ausführungsbeispiel gemäß Fig. 5 mittels der zweiten Sensoreinrichtung 108 der Nehmerdruck $p_{Nist}$ im Nehmerabschnitt der Flüssigkeitssäule, der im Druckraum 50 des Nehmerzylinders 20, in der Druckleitung 102 und im ersten Druckraum 76 der Stelleinheit 26 vorherrscht, als Führungsgröße für die Regelung des Elektromotors M über die Steuereinheit C erfaßbar. Mittels der ersten Sensoreinrichtung 104 hingegen ist der Geberdruck $p_{Gist}$ im Geberabschnitt der Flüssigkeitssäule, der im Druckraum 34 des Geberzylinders 14, in der Druckleitung 100 und im zweiten Druckraum 98 der Stelleinheit 26 ansteht, als Regelgröße erfaßbar. Vorzugsweise sind die erste Sensoreinrichtung 104 und die zweite Sensoreinrichtung 108 gemeinsam an der Stelleinheit 26 vorgesehen, so daß diese als "add on"-Baugruppe bereits die für die Regelung erforderliche Sensorik trägt. Den jeweiligen Einbauerfordernissen entsprechend ist es jedoch als Alternative auch denkbar, daß entsprechende Drucksensoren 104, 108 am Geberzylinder 14 bzw. am Nehmerzylinder 20 (oder in den Druckleitungen 100 bzw. 102) angeordnet werden, wie in Fig. 5 mit gestrichelten Linien am Geberzylinder 14 bzw. am Nehmerzylinder 20 angedeutet ist. Ebenfalls kann als Alternative zur Druckerfassung im Geberabschnitt der Flüssigkeitssäule daran gedacht werden, als Regelgröße die Geberkraft $F_{Gist}$ etwa mittels eines an der Kolbenstange 42 vorgesehenen Kraftsensors 104' zu erfassen, was ebenfalls in Fig. 5 mit gestrichelten Linien gezeigt ist.

Wie nachfolgend anhand der Fig. 6 noch näher erläutert werden soll, ist in der Steuereinheit C in Abhängigkeit von dem erfaßten Nehmerdruck $p_{Nist}$ ein Soll-Wert für den Geberdruck $p_{Gsoll}$ (oder die Geberkraft $F_{Gsoll}$) ermittelbar, worauf der ermittelte Geberdruck $p_{Gsoll}$ (oder die ermittelte Geberkraft $F_{Gsoll}$) über den von der Steuereinheit C angesteuerten Elektromotor M der Stelleinheit 26 einregelbar ist.

Zu diesem Zweck weist die Steuereinheit C wiederum ein Rechenglied R auf, mittels dessen der Soll-Wert für den Geberdruck $P_{Gsoll}$ (bzw. die Geberkraft $F_{Gsoll}$) nach folgender Beziehung ermittelbar ist:

$$p_{Gsoll} = 1/k_V * p_{Nist} \text{ bzw. } F_{Gsoll} = A_G/k_V * p_{Nist}$$

mit

$p_{Nist}$:   dem vermittels der zweiten Sensoreinrichtung 108 erfaßten Nehmerdruck im Nehmerabschnitt der Flüssigkeitssäule,

$k_V$:   einem in einem Speicherglied S der Steuereinheit C abgelegten Verstärkungsfaktor und

$A_G$:   der hydraulischen Wirkfläche des Geberkolbens 16.

Wenn bei dem zweiten Ausführungsbeispiel das Kupplungspedal 18 von der Bedienperson niedergetreten wird, um die Kupplung 12 auszurücken, schiebt der Geberkolben 16 den Geberabschnitt der Flüssigkeitssäule zwischen Geberkolben 16 und Stellkolben 28, den Stellkolben 28, den Nehmerabschnitt der Flüssigkeitssäule zwischen Stellkolben 28 und Nehmerkolben 22 sowie den Nehmerkolben 22 vor sich her. Dabei überfährt der Geberkolben 16 die im Zylindergehäuse 32 ausgebildete Verbindungsbohrung zu der an den Vorratsbehälter 40 angeschlossenen Nachlaufleitung 38, während der Stellkolben 28 die im Zylindergehäuse 74 vorgesehene Verbindungsbohrung zu der Nachlaufleitung 38 überfährt. In der Folge baut sich aufgrund der von der Bedienperson aufgebrachten Geberkraft $F_G$ und der Widerstandskraft der Kupplung 12, nämlich der Nehmerkraft $F_N$ sowohl ein Geberdruck $p_{Gist}$ im Geberabschnitt der Flüssigkeitssäule als auch ein Nehmerdruck $p_{Nist}$ im Nehmerabschnitt der Flüssigkeitssäule auf. Während der Geberdruck $p_{Gist}$ von der ersten Sensoreinrichtung 104 erfaßt wird, wird der Nehmerdruck $p_{Nist}$ von der zweiten Sensoreinrichtung 108 erfaßt. Aus dem erfaßten Nehmerdruck $p_{Nist}$ wird in der Steuereinheit C sodann mittels deren Rechenglied R gemäß der obigen Beziehung ein Soll-Wert für den Geberdruck $p_{Gsoll}$ ermittelt. In der Folge steuert die Steuereinheit C den Elektromotor M der Stelleinheit 26 an, bis der mittels der ersten Sensoreinrichtung 104 erfaßte Ist-Wert für den Geberdruck $p_{Gist}$ mit dem jeweils vorgegebenen Soll-Wert für den Geberdruck $p_{Gsoll}$ übereinstimmt. Mit anderen Worten gesagt entlastet die Stelleinheit 26 den Geberabschnitt der Flüssigkeitssäule in vorbestimmter Weise, so daß am Kupplungspedal 18 lediglich eine Reaktionskraft von mäßiger Höhe spürbar ist, obgleich eine Kupplung 12 mit einer großen Widerstandskraft, d.h. Nehmerkraft $F_N$ ausgerückt wird.

Für einen vorgegebenen Geberweg $s_{Gistn}$ ordnet die Steuereinheit C, genauer deren Rechenglied R also jedem Nehmerdruck $p_{Nistn}$ einen Soll-Wert für den Geberdruck $p_{Gsolln}$ zu, den es durch geeignete Ansteuerung des Elektromotors M durch die Steuereinheit C wie beschrieben einzuregeln gilt. Im Ergebnis wird bei einer Kupplungsbetätigung die Kupplungskennlinie sozusagen "gestaucht" an das Kupplungspedal 18 zurückgemeldet, wie es die Fig. 6 veranschaulicht. Bildet man bei einem vorgegebenen Geberweg $s_G$ ein Kräftegleichgewicht am Stellkolben 28, ergibt sich folgende Beziehung:

$$F_{PN} = F_S + F_{PG}$$

wobei

$$F_{PN} = p_N * A_S \text{ und } F_{PG} = p_G * A_S = F_G/A_G * A_S$$

mit

$A_S$: der hydraulischen Wirkfläche des Stellkolbens 28 (unter der vereinfachenden Annahme, daß diese zu beiden Seiten des Stellkolbens 28 gleich ist).

Demgemäß setzt sich in jedem Punkt der Kupplungskennlinie der für den jeweiligen Aus- bzw. Einrückzustand der Kupplung 12 im Nehmerzylinder 20 aufzubringende Nehmerdruck $p_N$ aus einem Geberkraftanteil $F_G/A_G$ und einem Stellkraftanteil $F_S/A_S$ zusammen. Dies ist ebenfalls in Fig. 6 dargestellt. Hieraus ergibt sich auch, daß, wenn die Stelleinheit 26 z.B. durch ein Versagen des Elektromotors M ausfallen sollte ($F_S = 0$), der Nehmerdruck $p_N$ alleine über die Geberkraft $F_G$, d.h. von der Bedienperson aufzubringen ist. Die Auslegung der hydraulischen Übersetzung der Betätigungsvorrichtung 10, d.h. die Dimensionierung der hydraulischen Wirkflächen an Geberkolben 16, Stellkolben 28 und Nehmerkolben 22 sollte deshalb zweckmäßig dergestalt erfolgen, daß ein Ausrücken der Kupplung 12 im Versagensfalle der Stelleinheit 26 mit zumutbaren Kräften noch möglich ist.

Es wurde bereits erwähnt, daß bei einem Verschleiß der Kupplung 12 die Nehmerkraft $F_N$ bedingt durch die Bauart der Kupplung 12 ansteigt. Demgemäß muß mittels der Betätigungsvorrichtung 10 ein höherer Nehmerdruck $p_N$ aufgebracht werden, um die Kupplung 12 auszurücken. In der Fig. 6 ist oberhalb der Kennlinie $p_{Nist}$ mit einer gestrichelten Linie eine weitere Kennlinie $p_{Nistv}$ für eine verschlissene Kupplung 12 aufgetragen. Wenn in der Steuereinheit C, genauer deren Rechenglied R stets mit ein und demselben Verstärkungsfaktor $k_v$ gerechnet werden würde, ergäbe sich infolge des Kupplungsverschleißes auch ein erhöhter Soll-Wert für den Geberdruck $p_{Gsoll}$ (siehe die in Fig. 6 oberhalb des Geberdruckverlaufs $p_{Gsoll}$ mit gestrichelten Linien eingezeichnete Kurve $p_{GV}$). Bei Einregelung eines solchen erhöhten SollWerts für den Geberdruck $p_{Gsoll}$ würde die Bedienperson in Abhängigkeit vom Verschleiß der Kupplung 12 eine dementsprechend erhöhte Reaktionskraft am Kupplungspedal 18 verspüren. Um dies zu vermeiden, weist die Steuereinheit C vorzugsweise ein Korrekturglied K auf, mittels dessen der Verstärkungsfaktor $k_V$ in Abhängigkeit vom Verschleiß der Kupplung 12 nach folgender Beziehung korrigierbar ist:

$$k_V = k_{V0} * (p_{Nmax0} + \Delta p_{Nmax}) / p_{Nmax0}$$

wobei

$$\Delta p_{Nmax} = p_{Nmaxist} - p_{Nmax0}$$

mit

$k_{V0}$: einem in dem Speicherglied S der Steuereinheit C abgelegten, festen Verstärkungsfaktor für eine unverschlissene Kupplung 12,

$p_{Nmax0}$: einem in dem Speicherglied S der Steuereinheit C abgelegten Festwert für einen maximalen Nehmerdruck im Nehmerabschnitt der Flüssigkeitssäule bei unverschlissener Kupplung 12 und

$p_{Nmaxist}$: dem vermittels der zweiten Sensoreinrichtung 108 bei einer Kupplungsbetätigung erfaßten maximalen Nehmerdruck im Nehmerabschnitt der Flüssigkeitssäule, den sich die Steuereinheit C durch Ablegen im Speicherglied S "merkt".

Demgemäß findet mit zunehmendem Verschleiß der Kupplung 12 also eine damit einhergehende Erhöhung des Verstärkungsfaktors $k_V$ statt, die dazu führt, daß die Bedienperson unabhängig vom Verschleiß der Kupplung 12 beim Aus- bzw. Einrücken der Kupplung 12 am Kupplungspedal 18 stets den gleichen Reaktionskraftverlauf verspürt. Mit anderen Worten gesagt wird die verschleißbedingte Zunahme der Nehmerkraft $F_N$ durch geänderte Ansteuerung der Stelleinheit 26 kompensiert. In diesem Zusammenhang kann im Hinblick auf ein optimiertes Regelverhalten auch daran gedacht werden, eine Anpassung des Verstärkungsfaktors $k_v$ erst dann vorzunehmen, wenn der erfaßte maximale Nehmerdruck $p_{Nmaxist}$ im Nehmerabschnitt der Flüssigkeitssäule (ggf. wiederholt) um einen vorbestimmten Betrag von dem in dem Speicherglied S der Steuereinheit C abgelegten Festwert $p_{Nmax0}$ für den Nehmerdruck abweicht. Als Alternative zur beschriebenen Vorgehensweise können zur Anpassung des Verstärkungsfaktors $k_V$ im übrigen natürlich auch die Druckverhältnisse im Geberabschnitt der Flüssigkeitssäule herangezogen werden, die mittels der ersten Sensoreinrichtung 104 erfaßt werden (in.der obigen Beziehung wären dann lediglich die Indizes N für Nehmerzylinder durch G für Geberzylinder zu ersetzen).

Schließlich kann beim zweiten Ausführungsbeispiel die Steuereinheit C auch so ausgebildet sein, daß in deren Speicherglied S verschiedene Verstärkungsfaktoren $k_v$ abgelegt sind, von denen die Bedienperson jeweils einen anwählen bzw. voreinstellen kann, z.B. mittels eines Vorwählschalters (nicht gezeigt), um das Betätigungsgefühl der Betätigungsvorrichtung 10 individuell den Bedürfnissen der Bedienperson anzupassen.

Im Folgenden soll das dritte Ausführungsbeispiel unter Bezugnahme auf die Fig. 7 und 8 nur insoweit beschrieben werden, als es sich von den vorherigen Ausführungsbeispielen unterscheidet. In diesem Zusammenhang wurde eingangs bereits erwähnt, daß sich das dritte Ausführungsbeispiel gemäß Fig. 7 vom zweiten Ausführungsbeispiel gemäß Fig. 5 im Hinblick auf die Sensorik und das Regelprinzip unterscheidet. So ist beim dritten Ausführungsbeispiel mittels der zweiten Sensoreinrichtung 110 der Stellweg $s_{Sist}$ des Stellkolbens 28 - alternativ der Nehmerweg $s_{Nist}$ des Nehmerkolbens 22 oder der Geberweg $s_{Gist}$ des Geberkolbens 16, wie in Fig. 7 mit den gestrichelten Kästchen unterhalb des Geberzylinders 14 bzw. des Nehmerzylinders 20 angedeutet - als Führungsgröße erfaßbar. Die erste Sensoreinrichtung 106 hingegen dient wiederum der Erfassung des Geberdrucks $p_{Gist}$ im Geberabschnitt der Flüssigkeitssäule als Regelgröße. Als Alternative hierzu kann auch die Geberkraft $F_{Gist}$ als Regelgröße, etwa mittels eines an der Kolbenstange 42 vorgesehenen Kraftsensors 106' (siehe Fig. 7), erfaßt werden.

Beim dritten Ausführungsbeispiel ist nun in der Steuereinheit C in Abhängigkeit von dem erfaßten Stellweg $s_{Sist}$ des Stellkolbens 28 (bzw. Nehmerweg $s_{Nist}$ des Nehmerkolbens 22 oder Geberweg $s_{Gist}$ des Geberkolbens 16) ein Soll-Wert für den Geberdruck $p_{Gsoll}$ (bzw. die Geberkraft $F_{Gsoll}$) ermittelbar, worauf der ermittelte Geberdruck $p_{Gsoll}$ (bzw. die ermittelte Geberkraft $F_{Gsoll}$) über den von der Steuereinheit C angesteuerten Elektromotor M der Stelleinheit 26 wie weiter oben schon beschrieben einregelbar ist. Dabei weist die Steuereinheit C wiederum ein Speicherglied S auf, in dem jetzt aber ein Wunschverlauf ($p_{Gsoll} = f(s_{Sist})$, $P_{Gsoll} = f(s_{Nist})$, $p_{Gsoll} = f(s_{Gist})$, $F_{Gsoll} = f(s_{Sist})$, $F_{Gsoll} = f(s_{Nist})$ bzw. $F_{Gsoll} = f(s_{Gist})$) der Regelgröße $p_G$ bzw. $F_G$ über der Führungsgröße $s_S$, $s_N$ bzw. $s_G$ abgelegt ist, aus dem für jeden mittels der zweiten Sensoreinrichtung 110 erfaßten Ist-Wert der Führungsgröße $s_{Sist}$, $s_{Nist}$ bzw. $s_{Gist}$ ein zugeordneter Soll-Wert für die Regelgröße $P_{Gsoll}$ bzw. $F_{Gsoll}$ bestimmbar ist.

Dies veranschaulicht die Fig. 8 für die Sensoranordnung 106, 110 gemäß Fig. 7, wobei der Wunschverlauf $p_{Gsoll} = f(s_{Sist})$ im dargestellten Ausführungsbeispiel aus drei Geraden mit unterschiedlicher Steigung und sich umkehrenden Vorzeichen zusammengesetzt ist, so daß bei einer Kupplungsbetätigung die am Kupplungspedal 18 spürbare Reaktionskraft zunächst ansteigt, dann geringfügig abfällt bevor sie nach Überschreiten des Auskuppelpunktes AK durch einen im Verhältnis starken Anstieg das Ende des Ausrückvorgangs anzeigt.

Wie bei dem zweiten Ausführungsbeispiel schiebt beim dritten Ausführungsbeispiel bei einem Niedertreten des Kupplungspedals 18 durch die Bedienperson der Geberkolben 16 den Geberabschnitt der Flüssigkeitssäule zwischen Geberkolben 16 und Stellkolben 28, den Stellkolben 28, den Nehmerabschnitt der Flüssigkeitssäule zwischen Stellkolben 28 und Nehmerkolben 22 sowie den Nehmerkolben 22 vor sich her, wobei der Geberkolben 16 bzw. der Stellkolben 28 die hydraulische Verbindung des jeweiligen Druckraums 34 bzw. 76 mit dem Vorratsbehälter 40 trennt, so daß sich wiederum ein Geberdruck $p_G$ bzw. Nehmerdruck $p_N$ im jeweiligen Abschnitt der Flüssigkeitssäule aufbaut. Der dabei aktuell vom Stellkolben 28 zurückgelegte Stellweg $s_{Sist}$ - in Fig. 8 exemplarisch für einen beliebigen Zeitpunkt mit $s_{Sistn}$ eingezeichnet - wird mittels der zweiten Sensoreinrichtung 110 erfaßt und über die Signalleitung 96 der Steuereinheit C zugeführt. In der Steuereinheit C wird sodann für den jeweiligen Stellweg $s_{Sistn}$ der diesem zugeordnete Soll-Wert für den Geberdruck $p_{Gsolln}$ ermittelt. In der Folge wird dieser Soll-Wert $p_{Gsolln}$ in der Steuereinheit C mit dem mittels der ersten Sensoreinrichtung 106 aktuell erfaßten Ist-Wert für den Geberdruck $p_{Gistn}$ verglichen. Besteht hier eine Abweichung zwischen dem Ist-Wert und dem Soll-Wert, ist der aktuelle Ist-Wert für den Geberdruck $p_{Gistn}$ z.B. höher als der ermittelte Soll-Wert für den Geberdruck $p_{Gsolln}$, steuert die Steuereinheit C den Elektromotor M der Stelleinheit 26 an, um diese Abweichung auszuregeln, in dem angesprochenen Beispiel würde die Stelleinheit 26 durch Aufbringung einer Stellkraft $F_S$ am Stellkolben 28 den Geberabschnitt also druckentlasten.

Es ist ersichtlich, daß die Bedienperson über das Kupplungspedal 18 somit nur eine Reaktionskraft entsprechend dem im Speicherglied S der Steuereinheit C abgelegten Wunschverlauf $p_{Gsoll} = f(s_{Sist})$ erfährt, während die Stelleinheit 26 zu dem für den jeweiligen Ausrückzustand der Kupplung 12 von der Bedienperson aufgebrachten Geberkraftanteil $F_G/A_G$ quasi automatisch den jeweils benötigten Stellkraftanteil $F_S/A_S$ beisteuert (siehe Fig. 8). Im Falle eines Verschleißes der Kupplung 12, bei dem, wie bereits erwähnt, die Nehmerkraft $F_N$ und somit der Nehmerdruck $p_N$ ansteigt (vergl. die gestrichelten Verschleißkurven $p_{NistV}$ bzw. $F_{NistV}$ in den Fig. 8 bzw. 10), ist es bei dem dritten Ausführungsbeispiel demgemäß auch nicht notwendig, in die Regelung der Stelleinheit 26 einzugreifen, der Verschleiß wird vielmehr durch die Stelleinheit 26 kräftemäßig automatisch kompensiert. Allerdings muß die Stelleinheit 26 hierfür so ausgelegt sein, daß sie den für den jeweiligen Ausrückzustand der Kupplung 12 benötigten Stellkraftanteil $F_S/A_S$ auch beizusteuern vermag. Im übrigen müßte, wie bei dem zweiten Ausführungsbeispiel, die Bedienperson im Falle eines Ausfalls der Stelleinheit 26 die zum Ausrücken der Kupplung 12 benötigte Kraft rein manuell aufbringen, was bei der Dimensionierung der Stelleinheit 26 und der Auswahl der hydraulischen Übersetzungen in der Betätigungsvorrichtung 10 ebenfalls zu berücksichtigen ist.

Bliebe zum dritten Ausführungsbeispiel noch anzumerken, daß in dem Speicherglied S der Steuereinheit C auch weitere, von der Kupplungskennlinie $p_{Nist}$ bzw. $F_{Nist}$ unabhängige Wunschverläufe ($p_{Gsoll} = f(s_{Sist})$, $p_{Gsoll} = f(s_{Nist})$, $p_{Gsoll} = f(s_{Gist})$, $F_{Gsoll} = f(s_{Sist})$, $F_{Gsoll} = f(s_{Nist})$ bzw. $F_{Gsoll} = f(s_{Gist})$) für die erwünschte Reaktionsgröße ($P_G$ bzw. $F_G$) abgelegt sein können, von denen die Bedienperson jeweils einen anwählen bzw. voreinstellen kann, um das Betätigungsgefühl der Betätigungsvorrichtung 10 individuell den Vorstellungen der Bedienperson anzupassen.

Das in Fig. 9 dargestellte vierte Ausführungsbeispiel der Betätigungsvorrichtung 10 unterscheidet sich von den oben beschriebenen Ausführungsbeispielen vornehmlich in der Verschaltung der einzelnen Komponenten. Die Sensorik und das Regelprinzip bei dem vierten Ausführungsbeispiel sind allerdings mit der Sensorik und dem Regelprinzip beim dritten Ausführungsbeispiel vergleichbar, so daß die diesbezüglichen Ausführungen dementsprechend kurz ausfallen können.

Gemäß Fig. 9 ist jetzt der Geberkolben 16 zur Reihenschaltung von Geberkolben 16 und Stellkolben 28 zwischen dem Stellkolben 28 und dem Nehmerkolben 22 angeordnet, wobei der Geberkolben 16 die Flüssigkeitssäule zwischen dem Stellkolben 28 und dem Nehmerkolben 22 in einen Servoabschnitt zwischen Stellkolben 28 und Geberkolben 16 und einen Druckabschnitt zwischen Geberkolben 16 und Nehmerkolben 22 unterteilt. Bei diesem Ausführungsbeispiel kann somit durch Kraftbeaufschlagung des Stellkolbens 28 über das mittels des Elektromotors M der Stelleinheit 26 antreibbare Getriebe 30 die auf den Druckabschnitt der Flüssigkeitssäule wirkende Kraft mittelbar über den Servoabschnitt der Flüssigkeitssäule definiert angehoben werden.

Demgemäß hat die Stelleinheit 26 wie bei dem unter Bezugnahme auf Fig. 1 beschriebenen ersten Ausführungsbeispiel wieder nur einen Druckraum 76, der allerdings im Gegensatz zum ersten Ausführungsbeispiel bedingt durch die Kreistrennung mittels des Geberkolbens 16 in der federvorgespannten Grundstellung des Stellkolbens 28 über die Nachlaufleitung 38 mit dem Vorratsbehälter 40 kommuniziert. Der Geberzylinder 14 hingegen hat auf der in Fig. 9 rechten Seite des Geberkolbens 16 einen weiteren Druckraum 112, der vom Geberkolben 16 druckdicht und variabel begrenzt wird. In den Druckraum 112 erstreckt sich die Kolbenstange 42 geeignet abgedichtet hinein, so daß deren in Fig. 9 linkes Ende betätigungswirksam am Geberkolben 16 anliegt.
Während der Druckraum 50 im Nehmerzylinder 20 mit dem ersten Druckraum 34 im Geberzylinder 14 über die Druckleitung 86 verbunden ist, verbindet eine weitere Druckleitung 114 den zweiten Druckraum 112 des Geberzylinders 14 mit dem Druckraum 76 der Stelleinheit 26.

Bei dem vierten Ausführungsbeispiel dient nun die zweite Sensoreinrichtung 118 dazu, den Geberweg $s_{Gist}$ des Geberkolbens 16 als Führungsgröße zu erfassen. Alternativ dazu könnte - wie bei dem dritten Ausführungsbeispiel - den jeweiligen Einbauerfordernissen entsprechend mittels der zweiten Sensoreinrichtung 118 allerdings auch der Nehmerweg $s_{Nist}$ des Nehmerkolbens 22 oder der Stellweg $s_{Sist}$ des Stellkolbens 28 als Führungsgröße erfaßt werden. Dies ist in Fig. 9 durch die gestrichelten Kästchen unterhalb des Nehmerzylinders 20 bzw. der Stelleinheit 26 angedeutet. Mittels der ersten Sensoreinrichtung 116 hingegen ist die Geberkraft $F_{Gist}$ als Regelgröße erfaßbar, was wie in Fig. 9 dargestellt durch einen Kraftsensor - in direkter Weise z.B. durch ein Piezoelement oder in indirekter Weise beispielsweise durch einen Dehnmeßstreifen - an der Kolbenstange 42 erfolgen kann.

Analog dem dritten Ausführungsbeispiel ist bei dem vierten Ausführungsbeispiel des weiteren in der Steuereinheit C in Abhängigkeit von dem erfaßten Geberweg $s_{Gist}$ (bzw. Nehmerweg $s_{Nist}$ oder Stellweg $s_{Sist}$) ein Soll-Wert für die Geberkraft $F_{Gsoll}$ ermittelbar, worauf die ermittelte Geberkraft $F_{Gsoll}$ über den von der Steuereinheit C angesteuerten Elektromotor M der Stelleinheit 26 einregelbar ist. Hierbei ist wiederum die Steuereinheit C mit einem Speicherglied S versehen, in dem ein Wunschverlauf ($F_{Gsoll} = f(s_{Gist})$ bzw. $F_{Gsoll} = f(s_{Nist})$ oder $F_{Gsoll} = f(s_{Sist})$) der Regelgröße, d.h. der Geberkraft $F_G$ über der Führungsgröße, d.h. dem Geberweg $s_G$ (bzw. Nehmerweg $s_N$ oder Stellweg $s_S$) abgelegt ist (vergl. Fig. 10).

Im Ergebnis ist wie bei dem dritten Ausführungsbeispiel auf diese Weise jedem mittels der zweiten Sensoreinrichtung 118 erfaßten Ist-Wert der Führungsgröße $s_{Gist}$ (bzw. $s_{Nist}$ oder $s_{Sist}$) ein bestimmter Soll-Wert für die Regelgröße $F_{Gsoll}$ zugeordnet. Weicht das ermittelte Wertepaar $F_{Gsoll}/s_{Gist}$ von dem erfaßten Wertepaar $F_{Gist}/s_{Gist}$ ab, erfolgt über die Steuereinheit C eine Ansteuerung des Elektromotors M der Stelleinheit 26 bis keine Abweichung mehr vorliegt.

Für den Fachmann ist ersichtlich, daß grundsätzlich auch andere Sensoren als bisher beschrieben und in den Figuren gezeigt eingesetzt werden können, ohne den Rahmen der Erfindung zu verlassen. So können z.B. anstelle der Hubwege $s_G$, $s_N$ bzw. $s_S$ der Kolben, d.h. der erwähnten Weggrößen auch dazu proportionale Größen erfaßt und geeignet ausgewertet werden, etwa (1) mittels eines Winkelwertgebers am Kupplungspedal 18 zur Erfassung der Winkelstellung des Kupplungspedals 18 bezüglich des Pedalbocks 44, die wiederum repräsentativ für den Geberweg $s_G$ ist, (2) mittels eines Winkelwertgebers am Ausrückhebel 24 zur Erfassung der Winkelstellung des Ausrückhebels 24 bezüglich des Umlenkbocks 54, die repräsentativ für den Nehmerweg $s_N$ ist, und/oder (3) mittels eines Drehstellungsgebers an der Spindelmutter 82 des Getriebes 30, aus dessen Signalen bei bekannter Steigung der Kugelrollspindel 80 auf den Stellweg $s_S$ des Stellkolbens 28 zurückgeschlossen werden kann.

Es wird eine hydraulische Betätigungsvorrichtung für eine Kraftfahrzeug-Reibkupplung offenbart, mit einem Geberzylinder, dessen Geberkolben über ein Betätigungsorgan mit einer Geberkraft beaufschlagbar und um einen Geberweg verschiebbar ist, und einem Nehmerzylinder, der einen mit dem Geberkolben über eine Flüssigkeitssäule hydraulisch in Reihe geschalteten, mit einem Ausrückorgan der Kraftfahrzeug-Reibkupplung wirkverbundenen Nehmerkolben aufweist. Ferner ist eine Stelleinheit vorgesehen, die in einer Variante einen mit dem Geberkolben hydraulisch in Reihe geschalteten Stellkolben hat, welcher über ein elektromotorisch antreibbares Getriebe kraftbeaufschlagbar und verschiebbar ist, sowie eine Steuereinheit, mittels der die Stelleinheit in Abhängigkeit von insbesondere einer Gebergröße ansteuerbar ist, um durch Kraftbeaufschlagung des Stellkolbens die auf die Flüssigkeitssäule wirkende Kraft zu erhöhen. Im Ergebnis wird eine einfache, kompakte Betätigungsvorrichtung geschaffen, mittels der auch kräftig dimensionierte Kupplungen betätigbar sind, ohne daß dies ein verglichen mit herkömmlichen Betätigungsvorrichtungen anderes Pedalgefühl bedingt.

BEZUGSZEICHENLISTE:

| 10 | Betätigungsvorrichtung |
| 12 | Kupplung |
| 14 | Geberzylinder |
| 16 | Geberkolben |
| 18 | Kupplungspedal |
| 20 | Nehmerzylinder |
| 22 | Nehmerkolben |
| 24 | Ausrückhebel |
| 26 | Stelleinheit |
| 28 | Stellkolben |
| 30 | Getriebe |
| 32 | Zylindergehäuse |
| 34 | Druckraum |
| 36 | Rückstellfeder |
| 38 | Nachlaufleitung |
| 40 | Vorratsbehälter |
| 42 | Kolbenstange |
| 44 | Pedalbock |
| 46 | Druckplatte |
| 48 | Zylindergehäuse |
| 50 | Druckraum |
| 52 | Druckstange |
| 54 | Umlenkbock |
| 56 | Ausrücklager |
| 58 | Ausrückmechanismus |
| 60 | Druckplatte |
| 62 | Schwungrad |
| 64 | Kurbelwelle |
| 66 | Anpreßfeder |
| 68 | Getriebeeingangswelle |
| 70 | Kupplungsscheibe |
| 72 | Vorlastfeder |
| 74 | Zylindergehäuse |
| 76 | Druckraum |
| 78 | Vorspannfeder |
| 80 | Kugelrollspindel |
| 82 | Spindelmutter |
| 84 | Stromleitung |
| 86 | Druckleitung |
| 88 | Druckleitung |
| 90 | erste Sensoreinrichtung |
| 92 | Signalleitung |
| 94 | zweite Sensoreinrichtung |
| 96 | Signalleitung |

| 98 | Druckraum |
|---|---|
| 100 | Druckleitung |
| 102 | Druckleitung |
| 104, 104' | erste Sensoreinrichtung |
| 106, 106' | erste Sensoreinrichtung |
| 108 | zweite Sensoreinrichtung |
| 110 | zweite Sensoreinrichtung |
| 112 | Druckraum |
| 114 | Druckleitung |
| 116 | erste Sensoreinrichtung |
| 118 | zweite Sensoreinrichtung |

| C | Steuereinheit |
|---|---|
| K | Korrekturglied |
| M | Elektromotor |
| R | Rechenglied |
| S | Speicherglied |

| $A_G$ | hydraulische Wirkfläche des Geberkolbens |
|---|---|
| $A_N$ | hydraulische Wirkfläche des Nehmerkolbens |
| $A_S$ | hydraulische Wirkfläche des Stellkolbens |
| $AK$ | Auskuppelpunkt |
| $AT_G$ | Anteil des durch den Geberzylinder beigesteuerten Volumens |
| $AT_S$ | Anteil des durch die Stelleinheit beigesteuerten Volumens |
| $F_G$ | Geberkraft |
| $F_N$ | Nehmerkraft |
| $F_S$ | Stellkraft |
| $k_U$ | Übersetzungsfaktor |
| $k_V$ | Verstärkungsfaktor |
| $P_G$ | Geberdruck |
| $P_N$ | Nehmerdruck |
| $S_G$ | Geberweg |
| $S_N$ | Nehmerweg |
| $S_S$ | stellweg |
| $\Delta V_N$ | Volumenaufnahme des Nehmerzylinders |

## Patentansprüche

1. Hydraulische Betätigungsvorrichtung (10) für eine Kraftfahrzeug-Reibkupplung (12), mit
einem Geberzylinder (14), dessen Geberkolben (16) über ein Betätigungsorgan (18) als Gebergrößen mit einer Geberkraft ($F_G$) beaufschlagbar und um einen Geberweg ($s_G$) verschiebbar ist,
einem Nehmerzylinder (20), der einen mit dem Geberkolben (16) hydraulisch in Reihe geschalteten Nehmerkolben (22) aufweist, welcher mit einem Ausrückorgan (24) der Kraftfahrzeug-Reibkupplung (12) wirkverbunden ist,
einer Stelleinheit (26), die einen Stellkolben (28) hat, der über ein mittels eines Elektromotors (M) antreibbares Getriebe (30) kraftbeaufschlagbar und verschiebbar ist, zur hydraulischen Reihenschaltung von Geberkolben (16) und Stellkolben (28) zwischen dem Geberkolben (16) und dem Nehmerkolben (22) angeordnet ist und eine Flüssigkeitssäule zwischen dem Geberkolben (16) und dem Nehmerkolben (22) in einen Geberabschnitt zwischen Geberkolben (16) und Stellkolben (28) und einen Nehmerabschnitt zwischen Stellkolben (28) und Nehmerkolben (22) unterteilt,
einer Steuereinheit (C), mittels der der Elektromotor (M) ansteuerbar ist, so daß durch Kraftbeaufschlagung des Stellkolbens (28) über das Getriebe (30) die auf den Nehmerabschnitt der Flüssigkeitssäule wirkende Kraft definiert anhebbar ist,
einer mit der Steuereinheit (C) signalverbundenen ersten Sensoreinrichtung (106; 106'), mittels der ein Geberdruck ($p_{Gist}$) im Geberabschnitt der Flüssigkeitssäule oder die Geberkraft ($F_{Gist}$) als Regelgröße erfaßbar ist, und
einer mit der Steuereinheit (C) signalverbundenen zweiten Sensoreinrichtung (110), mittels der ein Nehmerweg ($s_{Nist}$) des Nehmerkolbens (22), ein Stellweg ($s_{Sist}$) des Stellkolbens (28), der Geberweg ($s_{Gist}$) des Geberkolbens (16) oder eine dazu proportionale Größe als Führungsgröße erfaßbar ist,

wobei die Steuereinheit (C) ein Speicherglied (S) aufweist, in dem ein Wunschverlauf ($p_{Gsoll} = f(s_{Sist})$; $F_{Gsoll} = f(s_{Gist})$) der Regelgröße ($p_G$; $F_G$) über der Führungsgröße ($s_N$; $s_S$; $s_G$) abgelegt ist, aus dem für jeden mittels der zweiten Sensoreinrichtung (110) erfaßten Ist-Wert der Führungsgröße ($s_{Nist}$; $s_{Sist}$; $s_{Gist}$) ein zugeordneter Soll-Wert für die Regelgröße ($p_{Gsoll}$; $F_{Gsoll}$) bestimmbar ist, so daß in der Steuereinheit (C) in Abhängigkeit von dem erfaßten Nehmerweg ($s_{Nist}$), Stellweg ($s_{Sist}$), Geberweg ($s_{Gist}$) oder der erfaßten, dazu proportionalen Größe ein Soll-Wert für den Geberdruck ($p_{Gsoll}$) oder die Geberkraft ($F_{Gsoll}$) ermittelbar ist, und
wobei der ermittelte Geberdruck ($p_{Gsoll}$) oder die ermittelte Geberkraft ($F_{Gsoll}$) über den von der Steuereinheit (C) angesteuerten Elektromotor (M) der Stelleinheit (26) einregelbar ist.

2. Hydraulische Betätigungsvorrichtung (10) für eine Kraftfahrzeug-Reibkupplung (12), mit
einem Geberzylinder (14), dessen Geberkolben (16) über ein Betätigungsorgan (18) als Gebergrößen mit einer Geberkraft ($F_G$) beaufschlagbar und um einen Geberweg ($s_G$) verschiebbar ist,
einem Nehmerzylinder (20), der einen mit dem Geberkolben (16) hydraulisch in Reihe geschalteten Nehmerkolben (22) aufweist, welcher mit einem Ausrückorgan (24) der Kraftfahrzeug-Reibkupplung (12) wirkverbunden ist,
einer Stelleinheit (26), die einen Stellkolben (28) hat, der über ein mittels eines Elektromotors (M) antreibbares Getriebe (30) kraftbeaufschlagbar und verschiebbar ist, wobei der Geberkolben (16) zur hydraulischen Reihenschaltung von Geberkolben (16) und Stellkolben (28) zwischen dem Stellkolben (28) und dem Nehmerkolben (22) angeordnet ist und eine Flüssigkeitssäule zwischen dem Stellkolben (28) und dem Nehmerkolben (22) in einen Servoabschnitt zwischen Stellkolben (28) und Geberkolben (16) und einen Druckabschnitt zwischen Geberkolben (16) und Nehmerkolben (22) unterteilt,
einer Steuereinheit (C), mittels der der Elektromotor (M) ansteuerbar ist, so daß durch Kraftbeaufschlagung des Stellkolbens (28) über das Getriebe (30) die auf den Druckabschnitt der Flüssigkeitssäule wirkende Kraft definiert anhebbar ist,
einer mit der Steuereinheit (C) signalverbundenen ersten Sensoreinrichtung (116), mittels der die Geberkraft ($F_{Gist}$) als Regelgröße erfaßbar ist, und
einer mit der Steuereinheit (C) signalverbundenen zweiten Sensoreinrichtung (118), mittels der ein Nehmerweg ($s_{Nist}$) des Nehmerkolbens (22), der Geberweg ($s_{Gist}$) des Geberkolbens (16), ein Stellweg ($s_{Sist}$) des Stellkolbens (28) oder eine dazu proportionale Größe als Führungsgröße erfaßbar ist, wobei die Steuereinheit (C) ein Speicherglied (S) aufweist, in dem ein Wunschverlauf ($F_{Gsoll} = f(s_{Gist})$) der Regelgröße ($F_G$) über der Führungsgröße ($s_N$; $s_G$; $s_S$) abgelegt ist, aus dem für jeden mittels der zweiten Sensoreinrichtung (118) erfaßten Ist-Wert der Führungsgröße ($s_{Nist}$; $s_{Gist}$; $s_{Sist}$) ein zugeordneter Soll-Wert für die Regelgröße ($F_{Gsoll}$) bestimmbar ist, so daß in der Steuereinheit (C) in Abhängigkeit von dem erfaßten Nehmerweg ($s_{Nist}$), Geberweg ($s_{Gist}$), Stellweg ($s_{Sist}$) oder der erfaßten, dazu proportionalen Größe ein Soll-Wert für die Geberkraft ($F_{Gsoll}$) ermittelbar ist, und
wobei die ermittelte Geberkraft ($F_{Gsoll}$) über den von der Steuereinheit (C) angesteuerten Elektromotor (M) der Stelleinheit (26) einregelbar ist.

3. Betätigungsvorrichtung (10) nach Anspruch 1 oder 2, wobei der Geberkolben (16) mittels einer Rückstellfeder (36) in eine Grundstellung vorgespannt ist, in der ein Druckraum (34) des Geberzylinders (14) mit einem Vorratsbehälter (40) hydraulisch verbunden ist.

4. Betätigungsvorrichtung (10) nach Anspruch 3, wobei auch der Stellkolben (28) mittels einer Vorspannfeder (78) in eine Grundstellung vorgespannt ist, in der ein Druckraum (76) der Stelleinheit (26) mit einem Vorratsbehälter (40) hydraulisch verbunden ist.

5. Betätigungsvorrichtung (10) nach einem der vorhergehenden Ansprüche, wobei es sich bei dem Getriebe (30) der Stelleinheit (26) um einen Spindeltrieb handelt.

6. Betätigungsvorrichtung (10) nach einem der vorhergehenden Ansprüche, wobei es sich bei dem Elektromotor (M) der Stelleinheit (26) um einen bürstenlosen Gleichstrommotor handelt.

## Claims

1. Hydraulic actuating device (10) for a motor vehicle friction clutch (12), comprising
a master cylinder (14), the master piston (16) of which, via an actuating member (18), can be subjected to a master force ($F_G$) and can be displaced by a master travel ($s_G$) as master variables,
a slave cylinder (20) which has a slave piston (22) hydraulically connected in series to the master piston (16), said slave piston being actively connected to a clutch-release member (24) of the motor vehicle friction clutch (12),

an adjusting unit (26) which has an adjusting piston (28) which can be subjected to force and displaced via a transmission (30) that is driven by an electric motor (M), is arranged between the master piston (16) and the slave piston (22) for the hydraulic series connection of the master piston (16) and the adjusting piston (28) and divides a liquid column between the master piston (16) and the slave piston (22) into a master portion between the master piston (16) and the adjusting piston (28) and a slave portion between the adjusting piston (28) and the slave piston (22), a control unit (C), by means of which the electric motor (M) can be controlled, so that the force acting on the slave portion of the liquid column can be lifted in a defined manner by subjecting the adjusting piston (28) to force via the transmission (30),

a first sensor device (106; 106') which is signal-connected to the control unit (C) and by means of which a master pressure ($p_{Gactual}$) in the master portion of the liquid column or the master force ($F_{Gactual}$) can be detected as control variable, and

a second sensor device (110) which is signal-connected to the control unit (C) and by means of which a slave travel ($s_{Nactual}$) of the slave piston (22), an adjusting travel ($s_{Sactual}$) of the adjusting piston (28), the master travel ($s_{Gactual}$) of the master piston (16) or a variable proportional thereto can be detected as guide variable,

wherein the control unit (C) has a memory element (S) in which a desired curve ($p_{Gnominal} = f(s_{Sactual})$; $F_{Gnominal} = f(s_{Gactual})$) of the control variable ($p_G$; $F_G$) relative to the guide variable ($s_N$; $s_S$; $s_G$) is stored, from which an associated nominal value for the control variable ($p_{Gnominal}$; $F_{Gnominal}$) can be determined for each actual value of the guide variable ($s_{Nactual}$; $s_{Sactual}$; $s_{Gactual}$) detected by the second sensor device (110), so that a nominal value for the master pressure ($P_{Gnominal}$) or the master force ($F_{Gnominal}$) can be determined in the control unit (C) as a function of the detected slave travel ($S_{Nactual}$), adjusting travel ($s_{Sactual}$), master travel ($s_{Gactual}$) or the detected variable proportional thereto, and

wherein the determined master pressure ($p_{Gnominal}$) or the determined master force ($F_{Gnominal}$) can be set via the electric motor (M) of the adjusting unit (26) which is controlled by the control unit (C).

2. Hydraulic actuating device (10) for a motor vehicle friction clutch (12), comprising

a master cylinder (14), the master piston (16) of which, via an actuating member (18), can be subjected to a master force ($F_G$) and can be displaced by a master travel ($s_G$) as master variables,

a slave cylinder (20) which has a slave piston (22) hydraulically connected in series to the master piston (16), said slave piston being actively connected to a clutch-release member (24) of the motor vehicle friction clutch (12),

an adjusting unit (26) which has an adjusting piston (28) which can be subjected to force and displaced via a transmission (30) that is driven by an electric motor (M),

wherein the master piston (16) is arranged between the adjusting piston (28) and the slave piston (22) for the hydraulic series connection of the master piston (16) and the adjusting piston (28) and divides a liquid column between the adjusting piston (28) and the slave piston (22) into a servo portion between the adjusting piston (28) and the master piston (16) and a pressure portion between the master piston (16) and the slave piston (22),

a control unit (C), by means of which the electric motor (M) can be controlled, so that the force acting on the pressure portion of the liquid column can be lifted in a defined manner by subjecting the adjusting piston (28) to force via the transmission (30),

a first sensor device (116) which is signal-connected to the control unit (C) and by means of which the master force ($F_{Gactual}$) can be detected as control variable, and

a second sensor device (118) which is signal-connected to the control unit (C) and by means of which a slave travel ($S_{Nactual}$) of the slave piston (22), the master travel ($s_{Gactual}$) of the master piston (16), an adjusting travel ($s_{Sactual}$) of the adjusting piston (28) or a variable proportional thereto can be detected as guide variable,

wherein the control unit (C) has a memory element (S) in which a desired curve ($F_{Gnominal} = f(s_{Gactual})$) of the control variable ($F_G$) relative to the guide variable ($s_N$; $s_G$; $s_S$) is stored, from which an associated nominal value for the control variable ($F_{Gnominal}$) can be determined for each actual value of the guide variable ($s_{Nactual}$; $s_{Gactual}$; $s_{Sactual}$) detected by the second sensor device (118), so that a nominal value for the master force ($F_{Gnominal}$) can be determined in the control unit (C) as a function of the detected slave travel ($s_{Nactual}$), master travel ($s_{Gactual}$), adjusting travel ($s_{Sactual}$) or the detected variable proportional thereto, and

wherein the determined master force ($F_{Gnominal}$) can be set via the electric motor (M) of the adjusting unit (26) which is controlled by the control unit (C).

3. Actuating device (10) according to claim 1 or 2, wherein the master piston (16) is biased by a return spring (36) into a basic position in which a pressure chamber (34) of the master cylinder (14) is hydraulically connected to a reservoir (40).

4. Actuating device (10) according to claim 3, wherein the adjusting piston (28) is also biased by a biasing spring (78) into a basic position in which a pressure chamber (76) of the adjusting unit (26) is hydraulically connected to a reservoir (40).

5. Actuating device (10) according to one of the preceding claims, wherein the transmission (30) of the adjusting unit (26) is a spindle drive.

6. Actuating device (10) according to one of the preceding claims, wherein the electric motor (M) of the adjusting unit (26) is a brushless DC motor.

**Revendications**

1. Dispositif d'actionnement hydraulique (10) pour un embrayage à friction (12) de véhicule automobile, comportant un cylindre émetteur (14) dont le piston émetteur (16) peut être sollicité via un organe d'actionnement (18) à titre de grandeur d'émission avec une force d'émission ($F_G$) et déplacé d'une course d'émission ($S_G$), un cylindre récepteur (20) qui présente un piston récepteur (22) branché hydrauliquement en série avec le piston émetteur (16), qui est activement relié à un organe de débrayage (24) de l'embrayage à friction (12) de véhicule automobile, une unité de positionnement (26) qui possède un piston de positionnement (28) qui peut être sollicité en force et déplacé via un mécanisme (30) susceptible d'être entraîné par un moteur électrique (M), qui est agencée entre le piston émetteur (16) et le piston récepteur (22) pour brancher en série hydraulique le piston émetteur (16) et le piston de positionnement (28) et qui divise une colonne de liquide entre le piston émetteur (16) et le piston récepteur (22) en un tronçon émetteur entre le piston émetteur (16) et le piston de positionnement (28) et un tronçon récepteur entre le piston de positionnement (28) et le piston récepteur (22), une unité de commande (C) au moyen de laquelle le moteur électrique (M) peut être piloté de telle sorte que par sollicitation en force du piston de positionnement (28) via la le mécanisme (30), la force agissant sur le tronçon récepteur de la colonne de liquide peut être augmentée de manière définie, un premier dispositif capteur (106 ; 106') relié par signal à l'unité de commande (C), au moyen duquel une pression d'émission ($p_{Gist}$) dans le tronçon émetteur de la colonne de liquide ou la force d'émission ($F_{Gist}$) peut être détectée à titre de grandeur réglée, et un deuxième dispositif capteur (110) relié par signal à l'unité de commande (C), au moyen duquel une course de réception ($S_{Nist}$) du piston récepteur (22), une course de positionnement ($S_{Sist}$) du piston de positionnement (28), la course d'émission ($S_{Gist}$) du piston émetteur (16) ou une grandeur proportionnelle à celle-ci peut être détectée à titre de grandeur pilote, étant entendu que l'unité de commande (C) présente un élément de mémoire (S) dans lequel est mémorisée une allure souhaitée ($p_{Gsoll}$ = f($S_{Sist}$) ; $F_{Gsoll}$ = f($S_{Gist}$) de la grandeur réglée ($p_G$ ; $F_G$) au-dessus de la grandeur pilote ($S_N$ ; $S_S$ ; $S_G$), allure à partir de laquelle pour chaque valeur réelle de la grandeur pilote ($S_{Nist}$ ; $S_{Sist}$ ; $S_{Gist}$) détectée au moyen du deuxième dispositif capteur (110) on peut déterminer une valeur de consigne associée pour la grandeur réglée ($p_{Gsoll}$ ; $F_{Gsoll}$), de telle sorte que dans l'unité de commande (C) en fonction de la course de réception ($S_{Nist}$), de la course de positionnement ($S_{Sist}$), de la course d'émission ($S_{Gist}$) détecté ou de la grandeur détecté proportionnelle à celle-ci, on peut déterminer une valeur de consigne pour la pression d'émission ($p_{Gsoll}$) ou la force d'émission ($F_{Gsoll}$), et la pression d'émission ($p_{Gsoll}$) déterminée ou la force d'émission ($F_{Gsoll}$) déterminée peut être réglée via le moteur électrique (M) de l'unité de positionnement (26), qui est piloté par l'unité de commande (C).

2. Dispositif d'actionnement hydraulique (10) pour un embrayage à friction (12) de véhicule automobile, comportant un cylindre émetteur (14) dont le piston émetteur (16) peut être sollicité via un organe d'actionnement (18) à titre de grandeur d'émission avec une force d'émission ($F_G$) et être déplacé d'une course d'émission ($S_G$), un cylindre récepteur (20) qui présente un piston récepteur (22) branché hydrauliquement en série avec le piston émetteur (16), qui est activement relié à un organe de débrayage (24) de l'embrayage à friction (12) de véhicule automobile, une unité de positionnement (26) qui possède un piston de positionnement (28) qui peut être sollicité en force et déplacé via un mécanisme (30) susceptible d'être entraîné par un moteur électrique (M), dans lequel le piston émetteur (16), pour brancher en série hydrauliquement le piston émetteur (16) et le piston de positionnement (28), est agencé entre le piston de positionnement (28) et le piston récepteur (22) et divise une colonne de liquide entre le piston de positionnement (28) et le piston récepteur (22) en un tronçon d'asservissement entre le piston de positionnement (28) et le piston émetteur (16) et un tronçon de pression entre le piston émetteur (16) et le piston récepteur (22),

une unité de commande (C) au moyen de laquelle le moteur électrique (M) peut être piloté de telle sorte que par sollicitation en force du piston de positionnement (28) via le mécanisme (30), la force agissant sur le tronçon de pression de la colonne de liquide peut être augmentée de manière définie,

un premier dispositif capteur (116) relié par signal à l'unité de commande (C), au moyen duquel la force d'émission ($F_{Gist}$) peut être détectée à titre de grandeur réglée, et

un deuxième dispositif capteur (118) relié par signal à l'unité de commande (C), au moyen duquel une course de réception ($S_{Nist}$) du piston récepteur (22), la course d'émission ($S_{Gist}$) du piston émetteur (16), une course de positionnement ($S_{Sist}$) du piston de positionnement (28), ou une valeur proportionnelle à celle-ci peut être détectée à titre de grandeur pilote,

étant entendu que

l'unité de commande (C) présente un élément de mémoire (S) dans lequel est mémorisée une allure souhaitée ($F_{Gsoll} = f(S_{Sist)}$ ; $F_{Gsoll} = f(S_{Gist})$ de la grandeur réglée ($F_G$) au-dessus de la grandeur pilote ($S_N$ ; $S_G$ ; $S_S$), allure à partir de laquelle pour chaque valeur réelle de la grandeur pilote ($S_{Nist}$; $S_{Gist}$ ; $S_{Sist}$) détectée au moyen du deuxième dispositif capteur (118), on peut déterminer une valeur de consigne associée pour la grandeur réglée ($F_{Gsoll}$), de telle sorte que dans l'unité de commande (C) en fonction de la course de réception ($S_{Nist}$), de la course d'émission ($S_{Gist}$), de la course de positionnement ($S_{Sist}$) détecté ou de la grandeur détectée proportionnelle à celle-ci, on peut déterminer une valeur de consigne pour la force d'émission ($F_{Gsoll}$), et

la force d'émission ($F_{Gsoll}$) déterminée peut être réglée via le moteur électrique (M) de l'unité de positionnement (26), qui est piloté par l'unité de commande (C).

3. Dispositif d'actionnement (10) selon la revendication 1 ou 2, dans lequel le piston émetteur (16) est précontraint au moyen d'un ressort de rappel (36) jusque dans une position de base dans laquelle une chambre sous pression (34) du cylindre émetteur (14) est reliée hydrauliquement à un réservoir (40).

4. Dispositif d'actionnement (10) selon la revendication 3, dans lequel le piston de positionnement (28) est aussi précontraint au moyen d'un ressort de rappel (78) jusque dans une position de base dans laquelle une chambre sous pression (76) de l'unité der positionnement (26) est reliée hydrauliquement à un réservoir (40).

5. Dispositif d'actionnement (10) selon l'une quelconque des revendications précédentes, dans lequel le mécanisme (30) de l'unité de positionnement (26) est un entraînement à broche.

6. Dispositif d'actionnement (10) selon l'une quelconque des revendications précédentes, dans lequel le moteur électrique (M) de l'unité de positionnement (26) est un moteur à courant continu sans balais.

FIG.1

EP 1 728 000 B1

FIG. 2

FIG. 3

FIG. 4

FIG.5

EP 1 728 000 B1

FIG.6

EP 1 728 000 B1

FIG. 7

EP 1 728 000 B1

## FIG. 8

$P_N$
$P_G$

$P_{Nistv}$

AK

$P_{Nist}$

$F_s / A_s$

$P_{Gsoll}$

$P_{Gsolln}$

$F_G / A_G$

$S_{sistn}$

$S_s$

## FIG. 10

$F_N$
$F_G$

$F_{Nistv}$

AK

$F_{Nist}$

$F_{Gsoll}$

$F_{Gsolln}$

$S_{Gistn}$

$S_G$

24

FIG. 9

EP 1 728 000 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4918921 A
- US 5002166 A
- US 5094079 A
- EP 0324553 A
- DE 10222730 A1
- DE 20315735 U1

**In der Beschreibung aufgeführte Nicht-Patentliteratur**

- Handbuch der hydraulischen Bremsanlage und Kupplungsbetätigung. 1998, 261